# EUROPÄISCHE PATENTSCHRIFT

(11) **EP 1 061 105 B1**
(45) Veröffentlichungstag und Bekanntmachung des Hinweises auf die Patenterteilung: **25.06.2003**
(21) Anmeldenummer: 00120530.1
(22) Anmeldetag: 10.07.1996
(51) Int. Cl.: C09B 62/04, C09B 62/44

(54) **Faserreaktive Farbstoffe, Verfahren zu ihrer Herstellung und ihre Verwendung**
Fibre-reactive dyes, process for their preparation and the use thereof
Colorants réactifs, procédé pour leur préparation et leur utilisation

(30) Priorität: 19.07.1995 CH 213195
(43) Veröffentlichungstag der Anmeldung: 20.12.2000
(62) Teilanmeldung aus: 96810443.0
(73) Patentinhaber: Ciba Specialty Chemicals Holding Inc., 4057 Basel (CH)
(72) Erfinder: Reichert, Hans, 79618 Rheinfelden (DE); Müller, Bernhard, 79588 Efringen-Kirchen (DE); Tzikas, Athanassios, 4133 Pratteln (CH)

(56) Entgegenhaltungen:
- EP-A- 0 013 996
- EP-A- 0 089 923
- FR-A- 1 329 106
- FR-A- 2 304 651
- US-A- 4 925 928

## Beschreibung

Die vorliegende Erfindung betrifft faserreaktive Farbstoffe und ihre Verwendung zum Färben oder Bedrucken von cellulosehaltigen Fasermaterialien.

FR-A-2 304 651 und EP-A-89 923 offenbaren faserreaktive Farbstoffe auf Basis von durch einen Spacer getrennten Friazinnesten.

Gegenstand der vorliegenden Erfindung sind somit Verbindungen der Formel 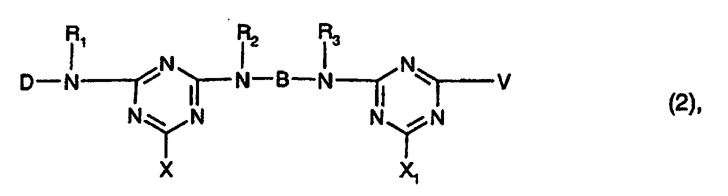 worin
B geradkettiges oder verzweigtes C₂-C₁₂-Alkylen, welches gegebenenfalls durch Hydroxy, Sulfo oder Sulfato substituiert oder durch -O-, -NH- oder -N(CH₃)- unterbrochen sein kann, bedeutet,
R₁, R₂ und R₃ unabhängig voneinander je Wasserstoff oder unsubstituiertes oder substituiertes C₁-C₆-Alkyl bedeuten,
X und X₁ unabhängig voneinander für Fluor, Chlor, Brom, 3-Carboxypyridin-1-yl oder 3-Carbamoylpyridin-1-yl stehen,
V für einen nicht-reaktiven Rest aus der Gruppe Hydroxy, Phenoxy, C₁-C₄-Alkylthio, Morpholino und gegebenenfalls substituiertes Amino oder für einen Reaktivrest der Formel 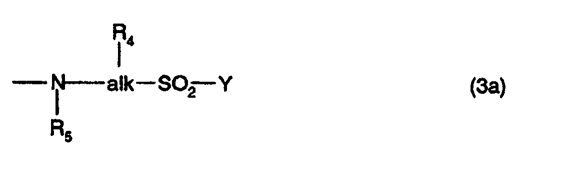 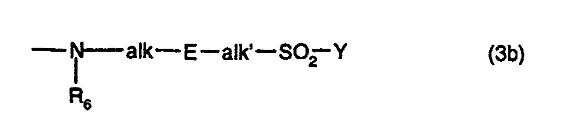 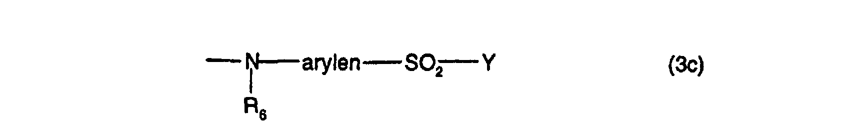 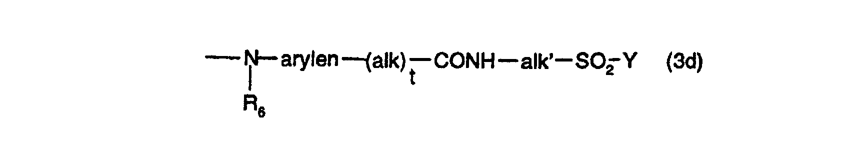 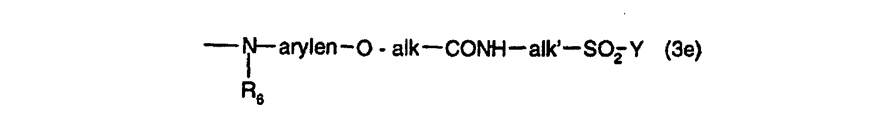 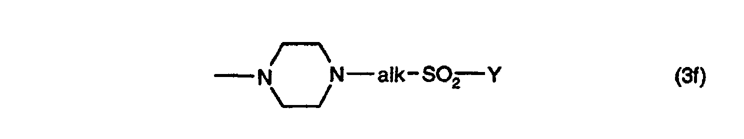 oder 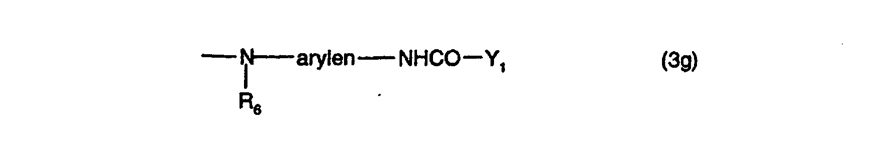 steht,
R₄ Wasserstoff, Hydroxy, Sulfo, Sulfato, Carboxy, Cyano, Halogen, C₁-C₄-Alkoxycarbonyl, Carbamoyl oder eine Gruppe -SO₂-Y ist,
R₅ Wasserstoff, gegebenenfalls durch Hydroxy, Sulfo, Sulfato, Carboxy oder Cyano substituiertes C₁-C₄-Alkyl oder ein Rest 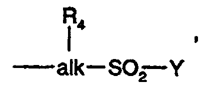 worin R₄ die zuvor angegebene
Bedeutung hat, ist,
R₆ für Wasserstoff oder C₁-C₄-Alkyl steht,
alk und alk' unabhängig voneinander je C₁-C₆-Alkylen sind,
arylen einen unsubstituierten oder durch Sulfo, Carboxy, Hydroxy, C₁-C₄-Alkyl, C₁-C₄-Alkoxy oder Halogen substituierten Phenylen- oder Naphthylenrest bedeutet,
Y Vinyl oder einen Rest -CH₂-CH₂-U bedeutet und U eine Abgangsgruppe ist,
Y₁ für eine Gruppe -CHZ-CH₂Z oder -CZ=CH₂ steht , worin Z Chlor oder Brom bedeutet,
E ein Rest -O- oder -NR₆-, worin R₆ die oben angegebene Bedeutung hat, ist, und t für die Zahl 0 oder 1 steht, und
D der Rest eines metallfreien Monoazo- oder Disazochromophors der Formel 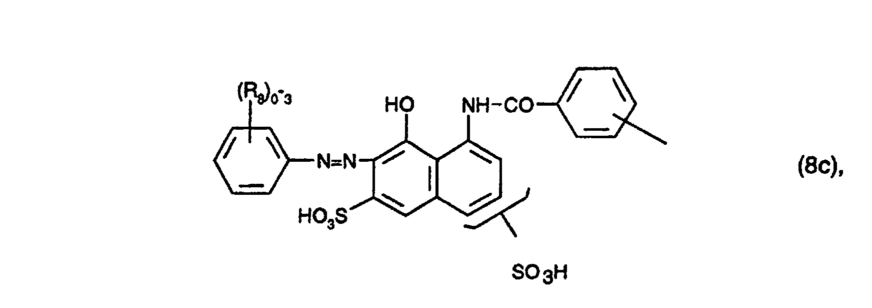 worin (R₈)₀-₃ für 0 bis 3 gleiche oder verschiedene Substituenten aus der Gruppe C₁-C₄-Alkyl, C₁-C₄-Alkoxy, Halogen, Carboxy und Sulfo steht, 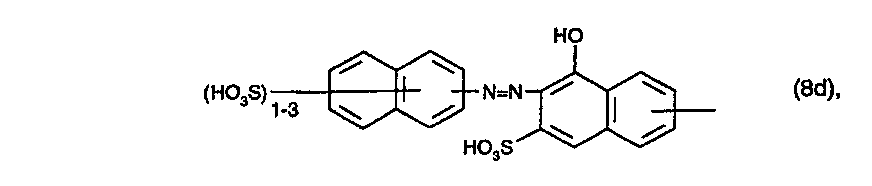 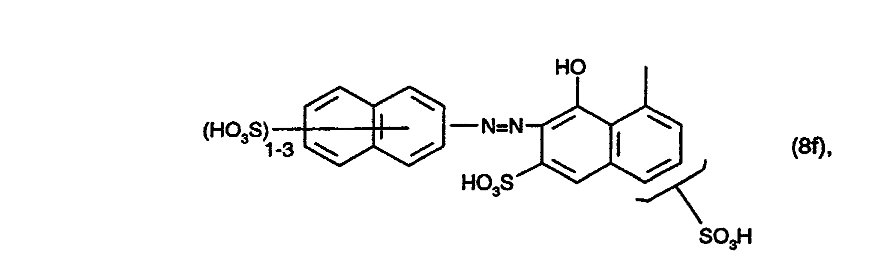 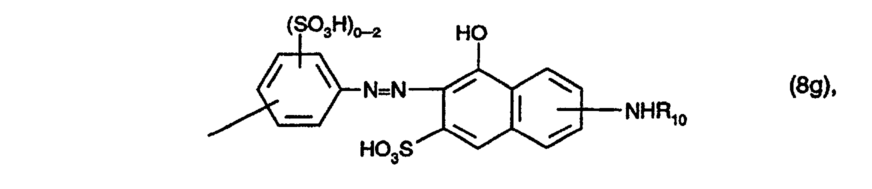 worin R₁₀ C₁-C₄-Alkanoyl, Benzoyl oder ein Halogentriazinylrest der Formel 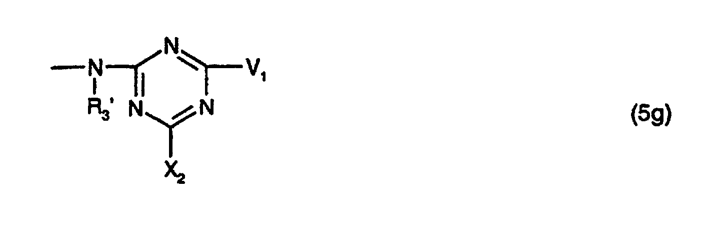 ist, für V₁ unabhängig die zuvor für V angegebenen Bedeutungen und Bevorzugung gelten, für X₂ unabhängig die zuvor für X angegebenen Bedeutungen und Bevorzugung gelten und für R₃' unabhängig die zuvor für R3 angegebenen Bedeutungen und Bevorzugungen gelten, 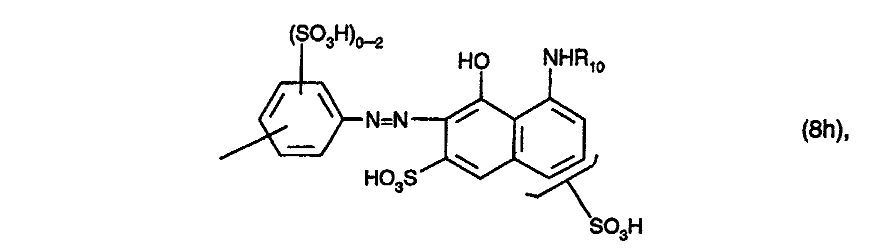 worin R₁₀ C₁-C₄-Alkanoyl, Benzoyl oder ein Halogentriazinylrest der oben angegebenen Formel (5g) ist, 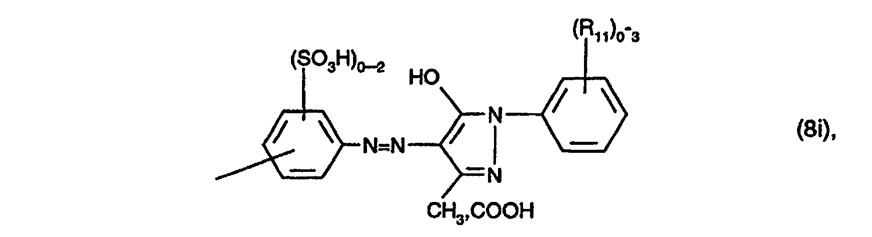 worin (R₁₁)₀-₃ für 0 bis 3 gleiche oder verschiedene Substituenten aus der Gruppe C₁-C₄-Alkyl, C₁-C₄-Alkoxy, Halogen, Carboxy und Sulfo steht, 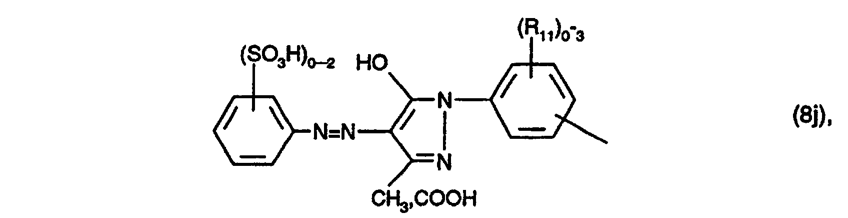 worin (R₁₁)₀-₃ die oben angegebene Bedeutung hat, 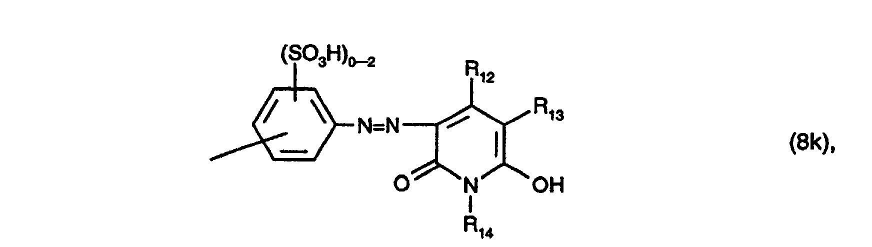 worin R₁₂ und R₁₄ unabhängig voneinander Wasserstoff, C₁-C₄-Alkyl oder Phenyl, und R₁₃ Wasserstoff, Cyano, Carbamoyl oder Sulfomethyl sind, 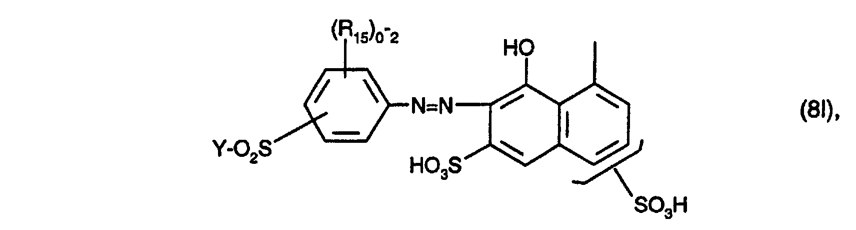 worin (R₁₅)₀-₂ für 0 bis 2 gleiche oder verschiedene Substituenten aus der Gruppe C₁-C₄-Alkyl, C₁-C₄-Alkoxy, Halogen, Carboxy und Sulfo steht; und Y die zuvor angegebene Bedeutung hat, 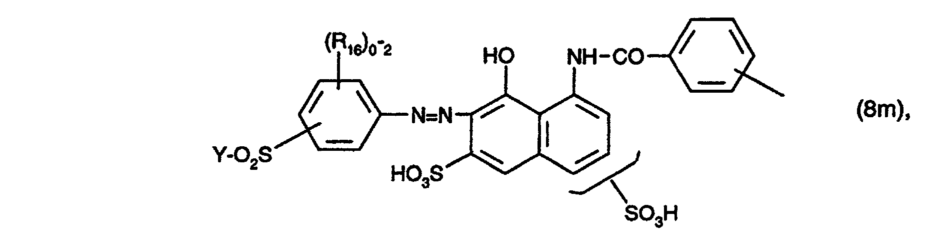 worin (R₁₆)₀-₂ für 0 bis 2 gleiche oder verschiedene Substituenten aus der Gruppe C₁-C₄-Alkyl, C₁-C₄-Alkoxy, Halogen, Carboxy und Sulfo steht; und Y die zuvor angegebene Bedeutung hat, 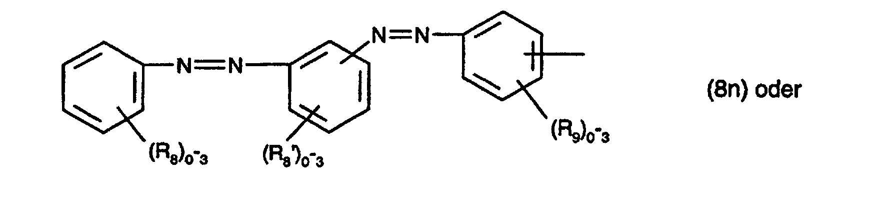 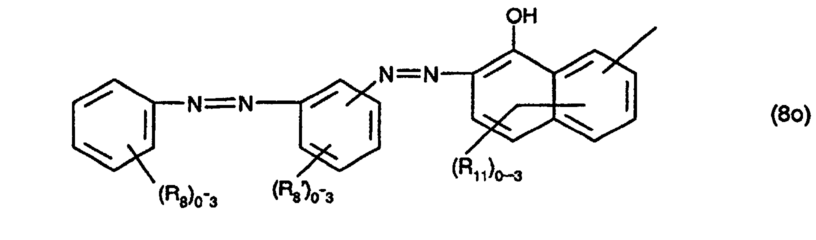 oder 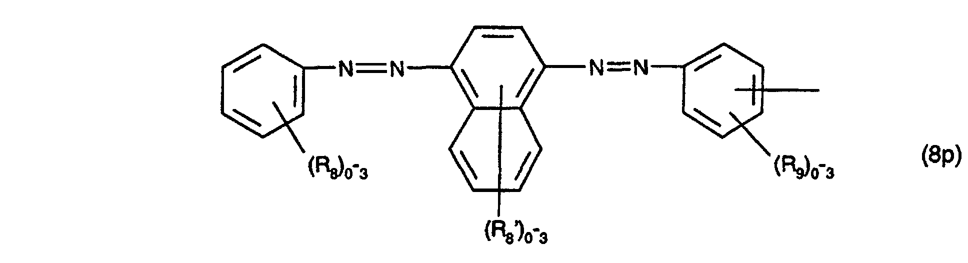 oder 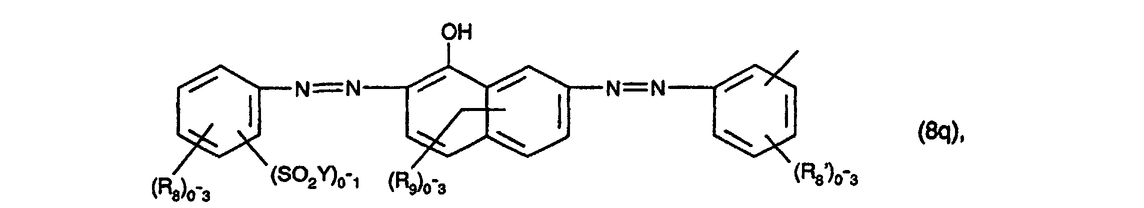 worin (R₈)₀-₃, (R₁₁)₀-₃ und Y jeweils die zuvor angegebene Bedeutung haben, (R₈')₀-₃ für 0 bis 3 gleiche oder verschiedene Substituenten aus der Gruppe C₁-C₄-Alkyl, C₁-C₄-Alkoxy, Halogen, Carboxy, Sulfo, C₁-C₄-Hydroxyalkoxy und C₁-C₄-Sulfatoalkoxy steht, und (R₉)₀-₃ für 0 bis 3 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht,
D der Rest eines Formazanchromophors der Formel 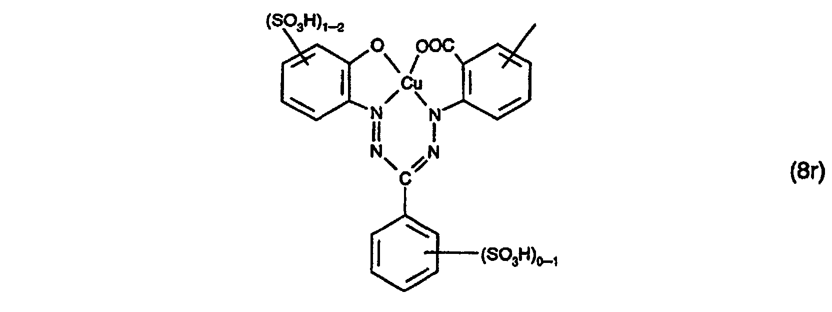 oder 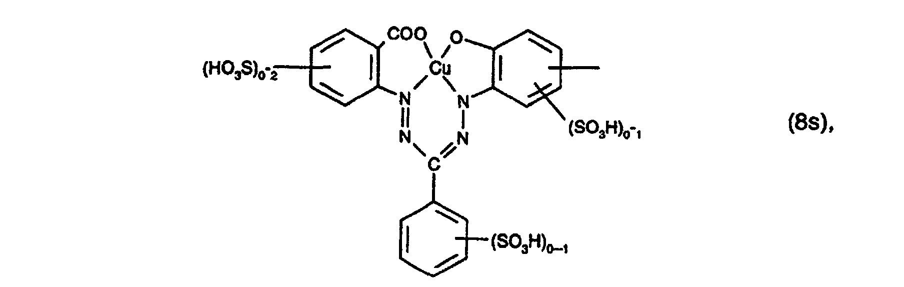 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind,
D der Rest eines Phthalocyaninchromophors der Formel 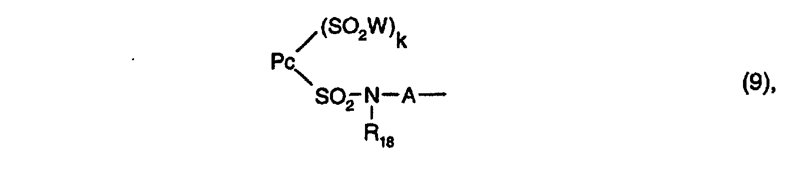 worin Pc der Rest eines Metallphthalocyanins, insbesondere der Rest eines Kupfer- oder Nickelphthalocyanins; W -OH und/oder -NR₁₇R₁₇'; R₁₇ und R₁₇' unabhängig voneinander Wasserstoff oder gegebenenfalls durch Hydroxy oder Sulfo substituiertes C₁-C₄-Alkyl; R₁₈ Wasserstoff oder C₁-C₄-Alkyl; A ein gegebenenfalls durch C₁-C₄-Alkyl, Halogen, Carboxy oder Sulfo substituierter Phenylenrest oder ein C₂-C₆-Alkylenrest; und k 1 bis 3 sind, oder D der Rest eines Dioxazinchromophors der Formel 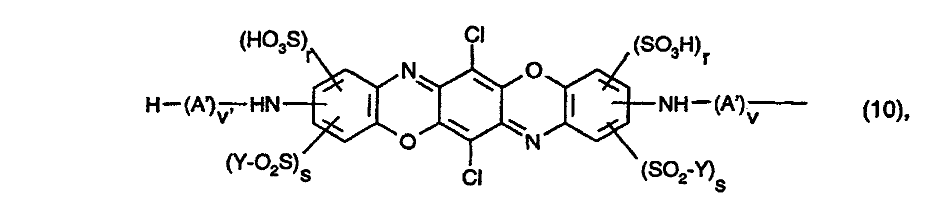 worin A' ein gegebenenfalls durch C₁-C₄-Alkyl, Halogen, Carboxy oder Sulfo substituierter Phenylenrest oder ein C₂-C₆-Alkylenrest ist, r, s, v und v' unabhängig voneinander je die Zahl 0 oder 1 bedeuten und Y die zuvor angegebene Bedeutung hat, ist und worin die Verbindung der Formel (2) mindestens eine Sulfogruppe aufweist.

Bedeuten R₁, R₂ oder R₃ gegebenenfalls substituiertes C₁-C₆-Alkyl, kann es sich z.B. um unsubstituiertes oder z.B. durch Hydroxy, Sulfo, Sulfato, Carboxy, Cyano, Halogen, C₁-C₄-Alkoxycarbonyl oder Carbamoyl substituiertes Methyl, Ethyl, n- oder iso-Propyl, n-, sec.-, tert.- oder iso-Butyl oder um geradkettiges oder verzweigtes Pentyl oder Hexyl handeln.

R₁, R₂ und R₃ stehen unabhängig voneinander je bevorzugt für Wasserstoff oder gegebenenfalls durch Hydroxy substituiertes C₁-C₄-Alkyl, besonders bevorzugt für Wasserstoff, Methyl, Ethyl oder Hydroxyethyl und insbesondere bevorzugt je für Wasserstoff.

Beispiele für B sind 1,2-Ethylen, 1-Methyl-1,2-Ethylen, 1,1-Dimethyl-1,2-ethylen, 1,2-Dimethyl-1,2-ethylen, 1,1,2,2-Tetramethyl-1,2-ethylen, 1,3-Propylen, 2,2-Dimethyl-1,3-propylen, 2-Hydroxy-1,3-propylen, 1,4-Butylen, 1,6-Hexylen, 2-Methyl-1,5-pentylen, -CH₂CH₂-O-CH₂CH₂-O-CH₂CH₂-, -(CH₂)₃-O-(CH₂)₃-O-(CH₂)₃- oder -CH₂CH₂-NH-CH₂CH₂-.

B steht bevorzugt für geradkettiges oder verzweigtes C₂-C₆-Alkylen, welches gegebenenfalls durch Hydroxy substituiert oder durch -O- unterbrochen ist, und besonders bevorzugt für geradkettiges oder verzweigtes C₂-C₆-Alkylen. Beispiele für insbesondere bevorzugte Alkylenreste B sind 1,2-Ethylen, 1-Methyl-1,2-ethylen, 1,3-Propylen, 2-Hydroxy-1,3-Propylen, 2-Methyl-1,5-pentylen und 1,6-Hexylen.

X und X₁ bedeuten unabhängig voneinander je bevorzugt Fluor oder Chlor. Die Variablen X und X₁ können verschieden oder vorzugsweise gleich sein.

Bedeutet V einen nicht-reaktiven gegebenenfalls substituierten Aminorest, so kann es sich z.B. um Amino; N-C₁-C₄-Alkylamino oder N,N-Di-C₁-C₄-Alkylamino, wobei das Alkyl jeweils z.B. durch Sulfo, Sulfato, Hydroxy, Carboxy oder Phenyl substituiert sein kann; Cyclohexylamino; Phenylamino oder Naphthylamino, wobei das Phenyl oder Naphthyl jeweils z.B. durch C₁-C₄-Alkyl, C₁-C₄-Alkoxy, Amino, C₂-C₄-Alkanoylamino, Carboxy, Sulfo oder Halogen substituiert sein kann; oder um N-C₁-C₄-Alkyl-N-phenylamino, wobei das Alkyl und Phenyl gegebenenfalls wie zuvor geschildert substituiert sein kann, handeln.

Beispiele für geeignete nicht-reaktive Aminoreste V sind Amino, Methylamino, Ethylamino, β-Hydroxyethylamino, N,N-Di-β-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4-, 2,5-,3,6- oder 4,6-Disulfophenylamino, 4-Methyl- oder 4-Methoxy-3-sulfophenylamino, 4-Methyl- oder 4-Methoxy-6-sulfophenylamino, 4-Methyl- oder 4-Methoxy-3,6-disulfophenylamino, o-Carboxyphenylamino, 1- oder 2-Naphthylamino, 1-Sulfo-2-naphthylamino, 1,5-, 1,6-, 4,8- oder 6,8-Disulfo-2-naphthylamino, 3,6,8-Trisulfo-2-naphthylamino, N-Ethyl-N-phenylamino, N-Methyl-N-phenylamino, N-β-sulfoethyl-N-phenylamino oder N-β-Hydroxyethyl-N-phenylamino.

V steht als nicht-reaktiver Aminorest bevorzugt für Amino, unsubstituiertes oder durch Hydroxy, Sulfo oder Sulfato substituiertes N-Mono- oder N,N-Di-C₁-C₂-Alkylamino, Cyclohexylamino, unsubstituiertes oder durch Methyl, Methoxy, Carboxy oder Sulfo substituiertes Phenylamino, Mono-, Di- oder Trisulfonaphthylamino oder für unsubstituiertes oder im C₁-C₂-Alkylteil durch Hydroxy, Sulfo oder Sulfato substituiertes N-C₁-C₂-Alkyl-N-phenylamino und besonders bevorzugt für Amino, unsubstituiertes oder durch Hydroxy, Sulfo oder Sulfato substituiertes N-C₁-C₂-Alkylamino, durch 1 oder 2 gleiche oder verschiedene Substituenten aus der Gruppe Sulfo, Methyl und Methoxy substituiertes Phenylamino oder durch 1 bis 3 Sulfogruppen substituiertes 2-Naphthylamino.

Bevorzugt als nicht-reaktive C₁-C₄-Alkylthioreste V Methylthio und Ethylthio.

Eine Gruppe von bevorzugten nicht-reaktiven Resten V umfasst Hydroxy, Morpholino, Amino; unsubstituiertes oder im Alkylteil durch Sulfo, Sulfato, Hydroxy, Carboxy oder Phenyl substituiertes N-C₁-C₄-Alkylamino oder N,N-Di-C₁-C₄-Alkylamino, Cyclohexylamino; unsubstituiertes oder im Phenyl- oder Naphthylteil durch C₁-C₄-Alkyl, C₁-C₄-Alkoxy, Amino, C₂-C₄-Alkanoylamino, Carboxy, Sulfo oder Halogen substituiertes Phenylamino oder Naphthylamino, und unsubstituiertes oder im Alkylteil durch Sulfo, Sulfato, Hydroxy, Carboxy oder Phenyl substituiertes und/oder im Phenylteil durch C₁-C₄-Alkyl, C₁-C₄-Alkoxy, Amino, C₂-C₄-Alkanoylamino, Carboxy, Sulfo oder Halogen substituiertes N-C₁-C₄-Alkyl-N-phenylamino.

Eine Gruppe von besonders bevorzugten nicht-reaktiven Resten V umfasst Hydroxy, Morpholino, Amino, unsubstituiertes oder durch Hydroxy, Sulfo oder Sulfato substituiertes N-Mono- oder N,N-Di-C₁-C₂-Alkylamino, Cyclohexylamino, unsubstituiertes oder durch Methyl, Methoxy, Carboxy oder Sulfo substituiertes Phenylamino, Mono-, Di- oder Trisulfonaphthylamino und unsubstituiertes oder im C₁-C₂-Alkylteil durch Hydroxy, Sulfo oder Sulfato substituiertes N-C₁-C₂-Alkyl-N-phenylamino.

Handelt es sich bei V um einen Reaktivrest der Formel (3a) - (3g) und bedeutet Y einen Rest -CH₂-CH₂-U, so kann es sich bei der Abgangsgruppe U z.B. um -Cl, -Br, -F, -OSO₃H, -SSO₃H, -OCO-CH₃, OPO₃H₂, -OCO-C₆H₅, OSO₂-C₁-C₄-Alkyl oder -OSO₂-N(C₁-C₄-Alkyl)₂ handeln. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Y bedeutet bevorzugt Vinyl, β-Chlorethyl, β-Sulfatoethyl, β-Thiosulfatoethyl,β-Acetoxyethyl, β-Phenoxyethyl oder β-Phosphatoethyl und besonders bevorzugt β-Sulfatoethyl oder Vinyl.

Z bedeutet bevorzugt Brom.

alk und alk' stehen unabhängig voneinander je z.B. für Methylen, 1,2-Ethylen, 1,3-Propylen, 1,4-Butylen, 1,5-Pentylen, 1,6-Hexylen oder für deren verzweigte Isomere. alk und alk' bedeuten unabhängig voneinander je bevorzugt einen C₁-C₄-Alkylenrest und besonders bevorzugt einen Ethylen- oder Propylenrest.

Bevorzugte Bedeutungen von arylen sind ein unsubstituierter oder durch Sulfo, Methyl, Methoxy oder Carboxy substituierter 1,3- oder 1,4-Phenylenrest und insbesondere ein unsubstituierter 1,3- oder 1,4-Phenylenrest.

R₄ bedeutet bevorzugt um Wasserstoff.

R₅ bedeutet bevorzugt Wasserstoff, C₁-C₄-Alkyl oder einen Rest der Formel 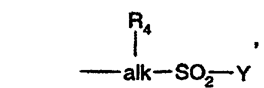 worin für R₄, Y und alk jeweils die zuvor genannten Bedeutungen und Bevorzugungen gelten. R₅ bedeutet besonders bevorzugt Wasserstoff, Methyl oder Ethyl.

R₆ bedeutet bevorzugt Wasserstoff, Methyl oder Ethyl und besonders bevorzugt Wasserstoff.

Die Variable E steht bevorzugt für -NH- oder -O- und besonders bevorzugt für -O-.

Die Variable t steht bevorzugt für die Zahl 0.

Bevorzugt als Reaktivreste der Formel (3a) bis (3g) sind solche, worin R₄, R₅ und R₆ je Wasserstoff, E den Rest -NH- oder -O-, alk und alk' unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, Y₁ -CHBr-CH₂Br oder -CBr=CH₂ und t die Zahl 0 bedeuten.

V steht als Reaktivrest besonders bevorzugt für eine Gruppe der Formel 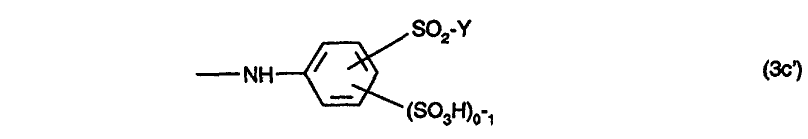 oder 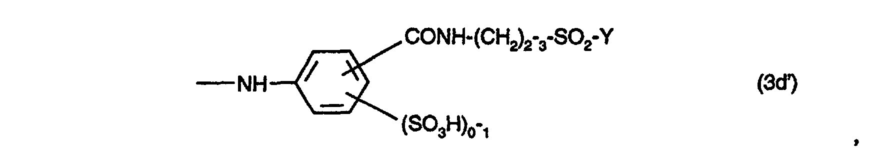 worin für Y die zuvor genannten Bedeutungen und Bevorzugungen gelten.

Die Reste der Formeln (8c), (8d) und (8f) bis (8q) können in den Phenyl- oder Naphthylringen als weiteren Substituenten noch einen Rest der Formel -SO₂Y enthalten, worin Y die zuvor angegebene Bedeutung hat.

Bei D als Rest eines Phthalocyaninfarbstoffes der Formel (9) sind R₁₇ und R₁₇' vorzugsweise Wasserstoff. A ist bevorzugt ein gegebenenfalls durch C₁-C₄-Alkyl, Halogen, Carboxy oder Sulfo substituierter Phenylenrest. Pc ist bevorzugt der Rest eines Kupferphthalocyanins.

Bei D als Rest eines Dioxazinfarbstoffes der Formel (10) bedeuten A' bevorzugt C₂-C₄-Alkylen oder unsubstituiertes oder durch Sulfo substituiertes 1,3- oder 1,4-Phenylen, r die Zahl 1, s die Zahl 0, v die Zahl 1 und v' die Zahl 0 oder 1.

D bedeutet insbesondere bevorzugt einen Monoazo- oder Disazochromophorrest der zuvor angegebenen Formel (8f), (8g), (8h), (8k), (81), (8n), (80), (8p) oder (8q) oder einen Formazanrest der zuvor angegebenen Formel (8r) oder (8s).

Bei den für die Variablen angegebenen Bedeutungen steht C₁-C₄-Alkyl generell für Methyl, Ethyl, n- oder iso-Propyl oder n-, iso-, sec.- oder tert.-Butyl. C₁-C₄-Alkoxy bedeutet generell Methoxy, Ethoxy, n- oder iso-Propoxy oder n-, iso-, sec.- oder tert.-Butoxy. Halogen steht generell z.B. für Fluor, Chlor oder Brom. Beispiele für C₁-C₄-Alkoxycarbonyl sind Methoxycarbonyl und Ethoxycarbonyl. Beispiele für C₁-C₄-Alkylthio sind Methylthio und Ethylthio. Beispiele für C₂-C₄-Alkanoylamino sind Acetylamino und Propionylamino.

Die Verbindungen der Formel (2) enthalten mindestens eine, vorzugsweise mindestens zwei und besonders bevorzugt 2 bis 8 Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium- oder Ammoniumsalze, das Salz des Mono-, Di- oder Triäthanolamins oder Na/Li- oder Na/Li/NH₄-Mischsalze genannt

Die Verbindungen der Formel (2) können in an sich bekannter Weise erhalten werden, z.B. indem man
eine Aminoverbindung der Formel

D - NH - R₁ (12),

ein Diamin der Formel

R₂ - HN - B - NH - R₃ (13),

eine Verbindung der Formel

V - H (14) (14)

und
je ein Halotriazin der Formel 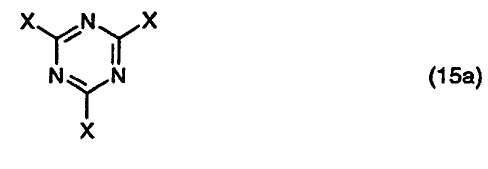 und 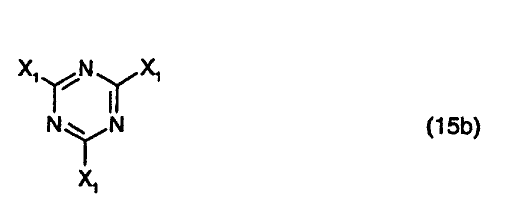 in beliebiger Reihenfolge miteinander umsetzt, wobei B, D, R₁, R₂, R₃, V, X und X₁ jeweils die zuvor angegebene Bedeutung haben. Eine Verfahrensvariante besteht darin, dass man eine der Verbindungen der Formeln (12) und (14) zunächst mit dem Halotriazin der Formel (15a) bzw. (15b) kondensiert, das erhaltene Produkt mit einem Diamin der Formel (13) kondensiert und das erhaltene Reaktionsprodukt mit der anderen Verbindung der Formel (12) und (14), welche zuvor mit dem Halotriazin der Formel (15a) bzw. (15b) kondensiert wurde, umsetzt.

Die Kondensationsreaktionen zwischen den Verbindungen der Formeln (12), (13), (14) (15a) und (15b) erfolgen im allgemeinen analog zu bekannten Verfahren, in der Regel in wässriger Lösung bei Temperaturen von z.B. 0 bis 50°C und einem pH-Wert von z.B. 4 bis 10. Die Verbindungen der Formeln (12), (13), (14) sowie die Halotriazinylverbindungen der Formeln (15a) und (15b) sind bekannt oder können in Analogie zu bekannten Verbindungen hergestellt werden. Die etwaige Einführung eines Carboxy- oder Carbamoylpyridiniumrests X oder X₁ erfolgt in der Regel im Anschluss an eine Kondensationsreaktion der entsprechenden Cyanurhalogenide.

Die erfindungsgemässen Farbstoffe sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasem und Polyurethane, und insbesondere cellulosehaltige Fasermaterialien aller Art genannt. Solche cellulosehaltige Fasermaterialien sind beispielsweise die natürlichen Cellulosefasem, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasem geeignet, die in Mischgeweben enthalten sind, z.B. von Gemischen aus Baumwolle mit Polyesterfasern oder Polyamidfasem. Besonders geeignet sind die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Herstellung der Verbindungen der Formel (2)

Beispiel 1:11 Teile Cyanurchlorid werden unter Zugabe eines Netzmittels und 5 Teilen Dinatriumhydrogenphosphat bei einer Temperatur von ca. 0°C in 50 Teilen Wasser verrührt. Man tropft eine neutrale Lösung von 40 Teilen der Aminoazoverbindung der Formel 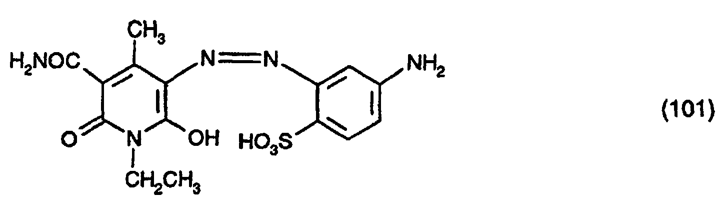 in 400 Teilen Wasser zu und hält dabei den pH-Wert durch Zugabe von wässriger Natriumhydroxidlösung konstant bei 4,5. Nach beendeter Kondensation erhält man das primäre Kondensationsprodukt von Cyanurchlorid und der Aminoazoverbindung der Formel (101) als wässrige Lösung (Lösung 1).

19 Teile Cyanurchlorid werden unter Zugabe eines Netzmittels und 5 Teilen Dinatriumhydrogenphosphat bei einer Temperatur von ca. 0°C in 50 Teilen Wasser verrührt. Man tropft dazu eine neutrale Lösung von 17 Teilen 2-Aminobenzolsulfonsäure in 170 Teilen Wasser und hält dabei den pH-Wert durch Zugabe von wässriger Natriumhydroxidlösung bei 4,5. Die erhaltene Lösung des Kondensationsprodukts von Cyanurchlorid und 2-Aminobenzolsulfonsäure wird in eine neutrale Lösung von 6 Teilen Ethan-1,2-diamin in 30 Teilen Wasser derart zugetropft, dass der pH-Wert 6 nicht übersteigt. Dieser pH-Wert wird bis zur vollständigen Kondensation durch Zugabe von wässriger Natriumhydroxidlösung konstant gehalten und die Reaktionslösung gegen Ende der Reaktion auf 40°C erhitzt. Man erhält das Kondensationsprodukt der Formel 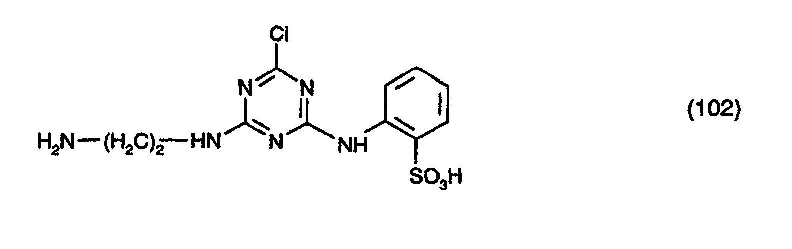 als wässrige Lösung (Lösung 2).

Die oben hergestellte Lösung 1 wird zur Lösung 2 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält den Farbstoff der Formel 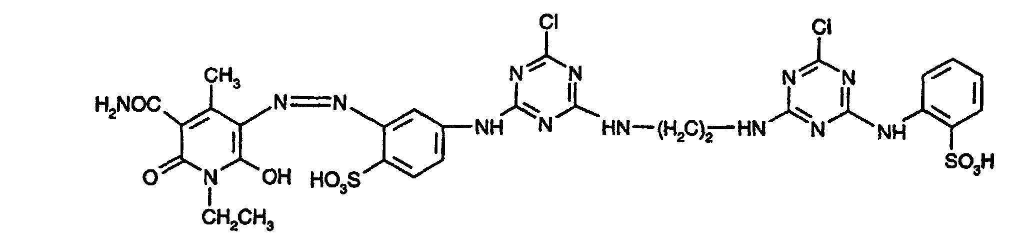 der Cellulose in einer brillanten gelben Nuance mit guten Allgemeinechtheiten färbt.

Beispiel 2: 14 Teile Cyanurfluorid werden zu einer neutralen Lösung von 40 Teilen der Verbindung der Formel (101) und 5 Teilen Dinatriumhydrogenphosphat in 400 Teilen Wasser bei einer Temperatur von ≤2°C zugetropft und der pH-Wert durch Zugabe von wässriger Natriumhydroxidlösung konstant gehalten. Nach beendeter Kondensation erhält man das primäre Kondensationsprodukt von Cyanurfluorid und der Aminoazoverbindung der Formel (101) als wässrige Lösung (Lösung 3).

14 Teile Cyanurfluorid werden zu einer neutralen Lösung von 17 Teilen 2-Aminobenzolsulfonsäure und 5 Teilen Dinatriumhydrogenphosphat in 170 Teilen Wasser bei einer Temperatur von ≤2°C zugetropft und der pH-Wert durch Zugabe von wässriger Natriumhydroxidlösung konstant gehalten. Zu der erhaltenen Lösung des Kondensationsprodukts von Cyanurfluorid und 2-Aminobenzolsulfonsäure wird eine neutrale Lösung von 6 Teilen Ethan-1,2-diamin in 30 Teilen Wasser derart zugetropft, dass der pH-Wert 6 nicht übersteigt. Dieser pH-Wert wird bis zur vollständigen Kondensation durch Zugabe von wässriger Natriumhydroxidlösung konstant gehalten und die Reaktionslösung gegen Ende der Reaktion auf 40°C erhitzt. Man erhält das Kondensationsprodukt der Formel 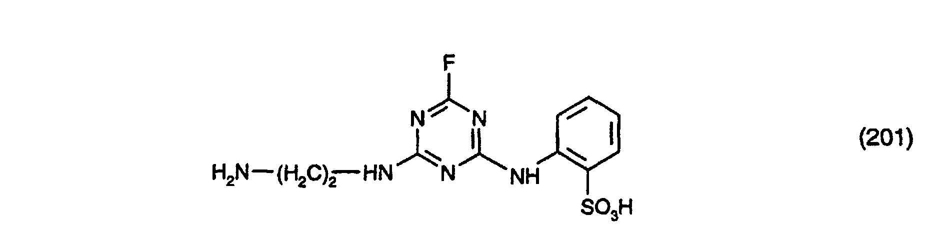 als wässrige Lösung (Lösung 4).

Die oben hergestellte Lösung 3 wird zur Lösung 4 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält den Farbstoff der Formel 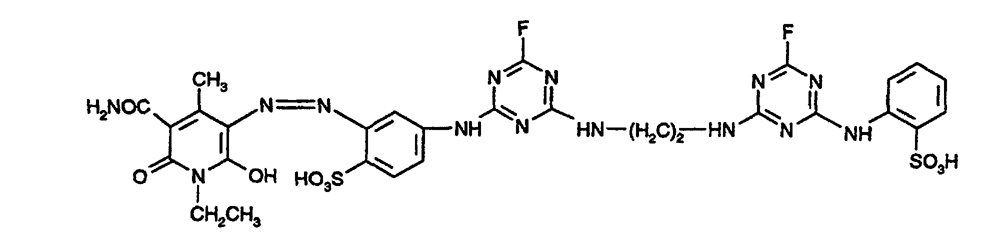 der Cellulose in einer brillanten gelben Nuance mit guten Allgemeinechtheiten färbt.

Beispiel 3: Die gemäss Beispiel 1 hergestellte Lösung 1 wird zu der gemäss Beispiel 2 hergestellten Lösung 4 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält den Farbstoff der Formel 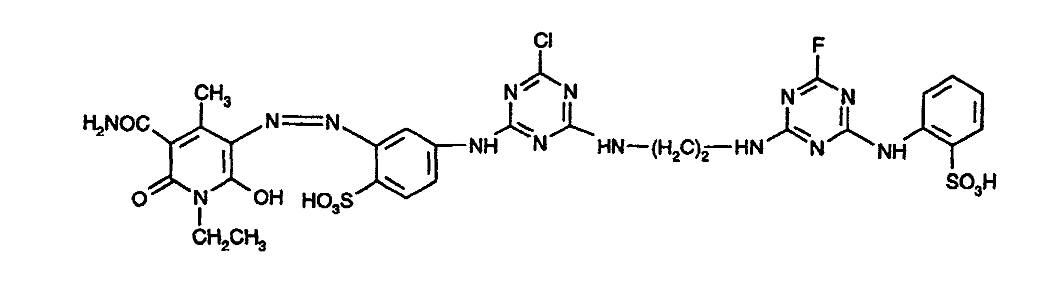 der Cellulose in einer brillanten gelben Nuance mit guten Allgemeinechtheiten färbt.

Beispiel 4: Die gemäss Beispiel 2 hergestellte Lösung 3 wird zu der gemäss Beispiel 1 hergestellten Lösung 2 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält den Farbstoff der Formel 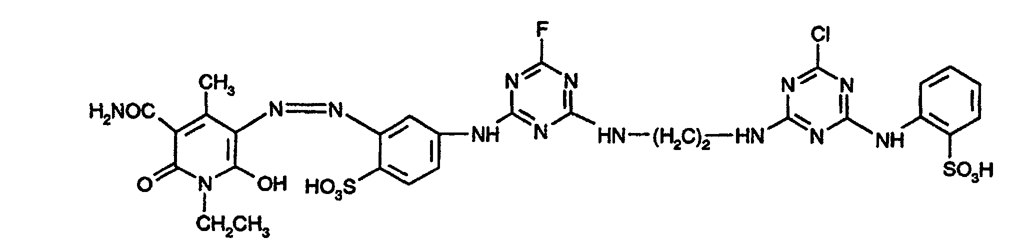 der Cellulose in einer brillanten gelben Nuance mit guten Allgemeinechtheiten färbt.

Beispiel 4a: 14 Teile Cyanurfluorid werden zu einer neutralen Lösung von 40 Teilen der Verbindung der Formel (101) und 5 Teilen Dinatriumhydrogenphosphat in 400 Teilen Wasser bei einer Temperatur von ≤2°C getropft und der pH-Wert durch Zugabe von wässriger Natriumhydroxidlösung konstant gehalten. Zu der Lösung des primären Kondensationsprodukts von Cyanurfluorid und der Aminoazoverbindung der Formel (101) wird eine neutrale Lösung von 6 Teilen Ethan-1,2-diamin in 30 Teilen Wasser derart zugetropft, dass der pH-Wert 6 nicht übersteigt. Dieser pH-Wert wird bis zur vollständigen Kondensation durch Zugabe von wässriger Natriumhydroxidlösung konstant gehalten. Man erhält das Kondensationsprodukt der Formel 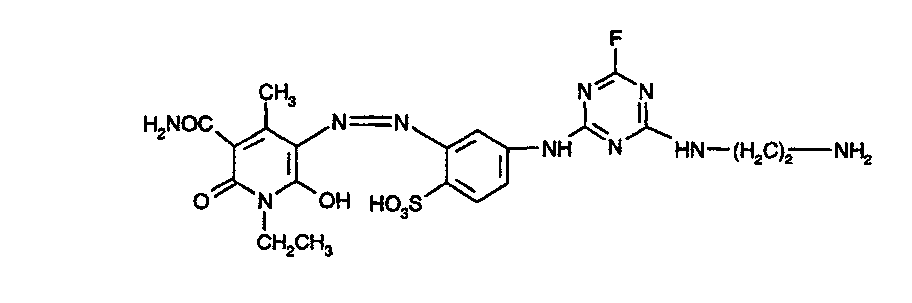 als wässrige Lösung (Lösung 5).

19 Teile Cyanurchlorid werden unter Zugabe eines Netzmittels und 5 Teilen Dinatriumhydrogenphosphat bei einer Temperatur von ca. 0°C in 50 Teilen Wasser verrührt. Man tropft dazu eine neutrale Lösung von 17 Teilen 2-Aminobenzolsulfonsäure in 170 Teilen Wasser und hält dabei den pH-Wert durch Zugabe von wässriger Natriumhydroxidlösung bei 4,5, bis die Umsetzung vollständig ist (Lösung 6).

Lösung 5 wird zu Lösung 6 gegeben und der pH-Wert auf einen Wert von 8,5 erhöht. Diesen hält man durch Zugabe von wässriger Natriumhydroxidlösung konstant, bis die Kondensation beendet ist. Die Reaktionslösung wird dialytisch von anorganischen Salzen befreit und eingedampft. Man erhält den Farbstoff gemäss Beispiel 4 in vergleichbarer Ausbeute und Qualität.

Beispiele 4b-4m: Analog wie in den Beispielen 1-4a beschrieben lassen sich die folgenden Reaktivfarbstoffe herstellen.

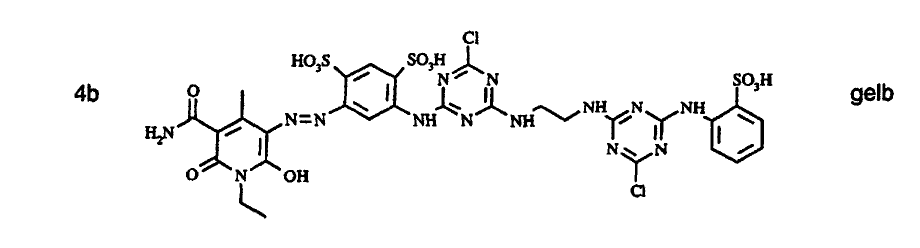

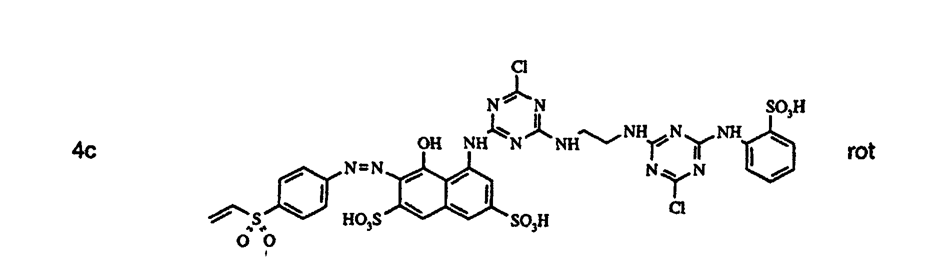

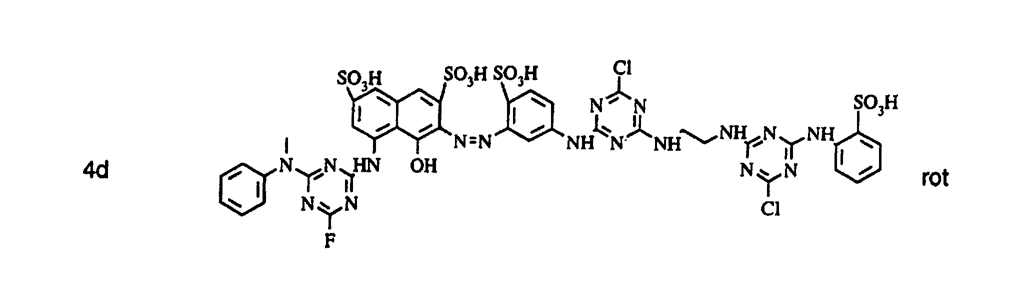

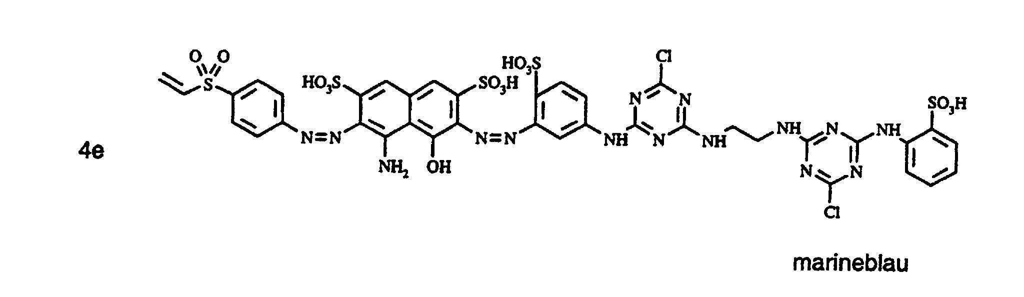

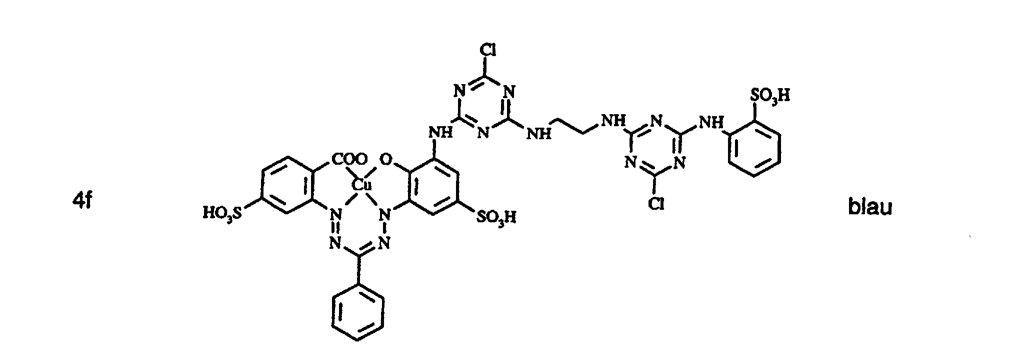

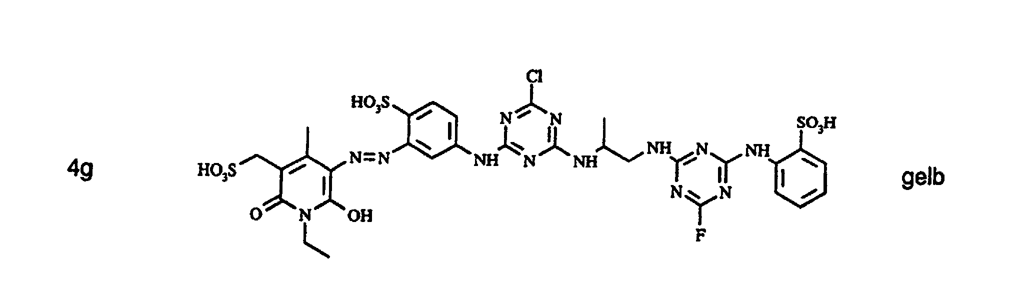

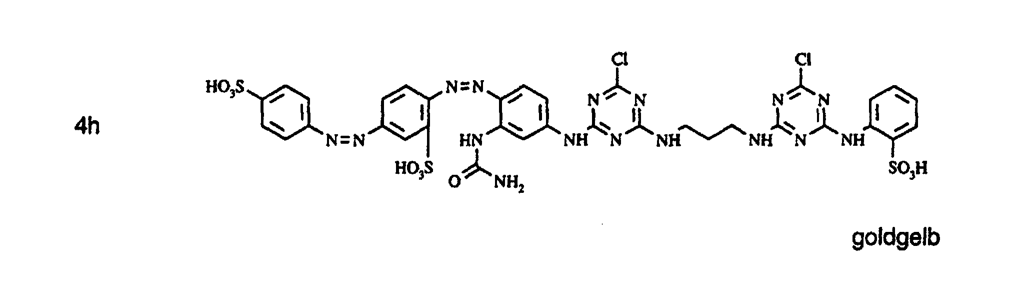

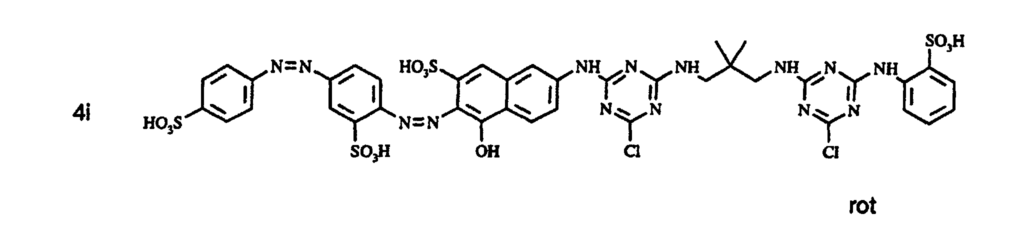

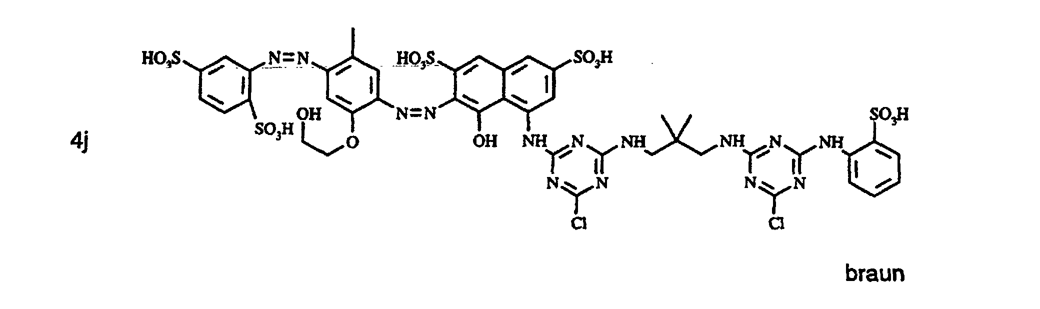

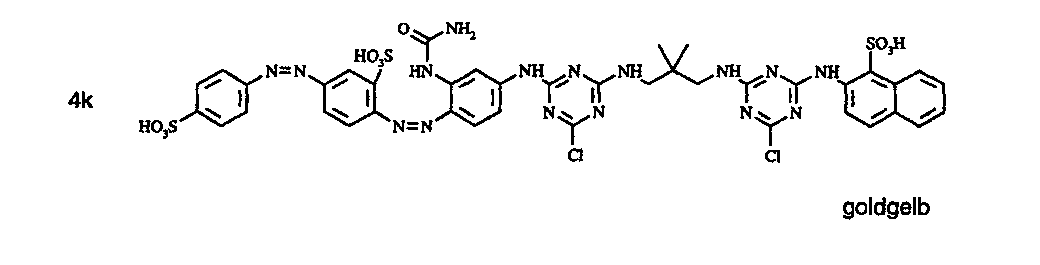

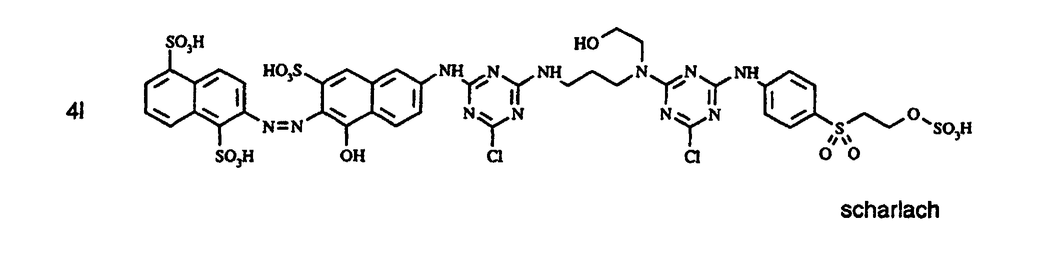

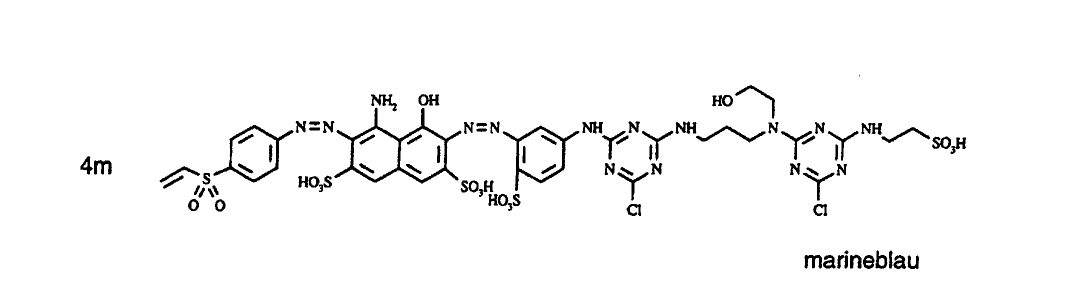

Färbevorschrift I 2 Teile des gemäss Beispiel 2 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II 2 Teile des gemäss Beispiel 2 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III 4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Druckvorschrift I 3 Teile des gemäss Beispiel 1 erhaltenen Reaktivfarbstoffes werden unter schnellem Rühren in 100 Teile einer Stammverdickung, enthaltend 50 Teile 5%ige Natriumalginat verdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel 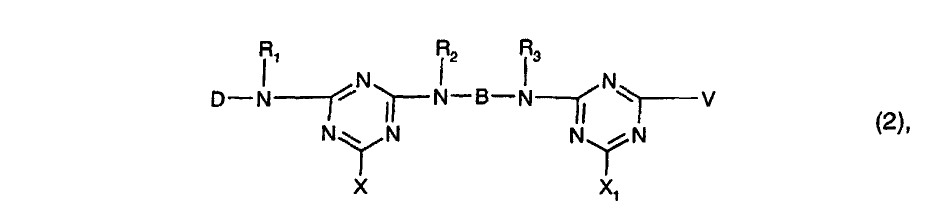 worin
B geradkettiges oder verzweigtes C₂-C₁₂-Alkylen, welches gegebenenfalls durch Hydroxy, Sulfo oder Sulfato substituiert oder durch -O-, -NH- oder -N(CH₃)- unterbrochen sein kann, bedeutet,
R₁, R₂ und R₃ unabhängig voneinander je Wasserstoff oder unsubstituiertes oder substituiertes C₁-C₆-Alkyl bedeuten,
X und X₁ unabhängig voneinander für Fluor, Chlor, Brom, 3-Carboxypyridin-1-yl oder 3-Carbamoylpyridin-1-yl stehen,
V für einen nicht-reaktiven Rest aus der Gruppe Hydroxy, Phenoxy, C₁-C₄-Alkylthio, Morpholino und gegebenenfalls substituiertes Amino oder für einen Reaktivrest der Formel 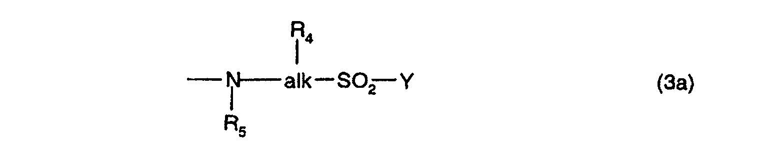 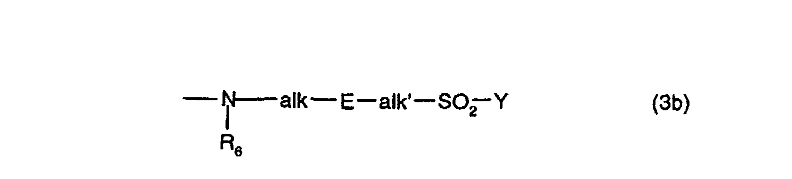 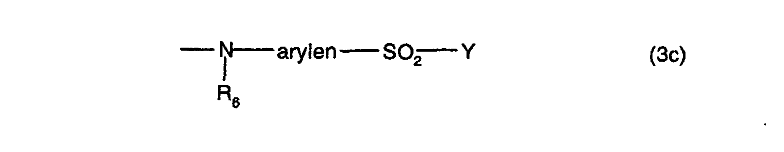 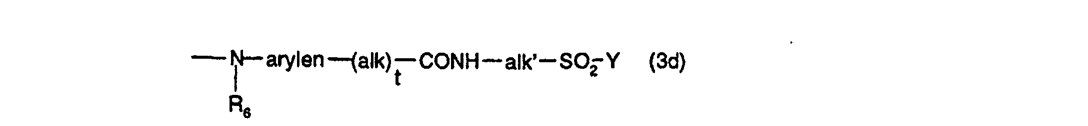 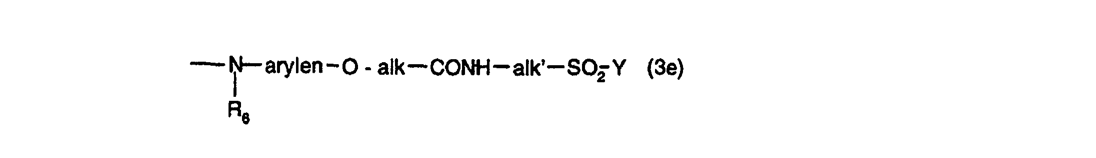 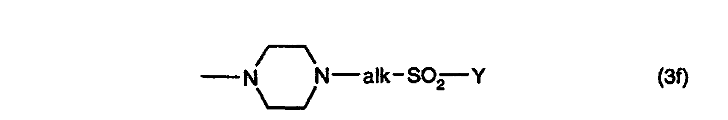 oder 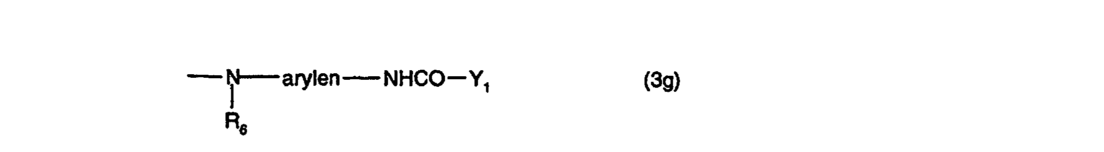 steht,
R₄ Wasserstoff, Hydroxy, Sulfo, Sulfato, Carboxy, Cyano, Halogen, C₁-C₄-Alkoxycarbonyl, Carbamoyl oder eine Gruppe -SO₂-Y ist,
R₅ Wasserstoff, gegebenenfalls durch Hydroxy, Sulfo, Sulfato, Carboxy oder Cyano substituiertes C₁-C₄-Alkyl oder ein Rest 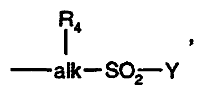 worin R₄ die zuvor angegebene
Bedeutung hat, ist,
R₆ für Wasserstoff oder C₁-C₄-Alkyl steht,
alk und alk' unabhängig voneinander je C₁-C₆-Alkylen sind,
arylen einen unsubstituierten oder durch Sulfo, Carboxy, Hydroxy, C₁-C₄-Alkyl, C₁-C₄-Alkoxy oder Halogen substituierten Phenylen- oder Naphthylenrest bedeutet,
Y Vinyl oder einen Rest -CH₂-CH₂-U bedeutet und U eine Abgangsgruppe ist,
Y₁ für eine Gruppe -CHZ-CH₂Z oder -CZ=CH₂ steht, worin Z Chlor oder Brom bedeutet,
E ein Rest -O- oder -NR₆-, worin R₆ die oben angegebene Bedeutung hat, ist, und t für die Zahl 0 oder 1 steht, und
D ein Chromophorrest der Formel 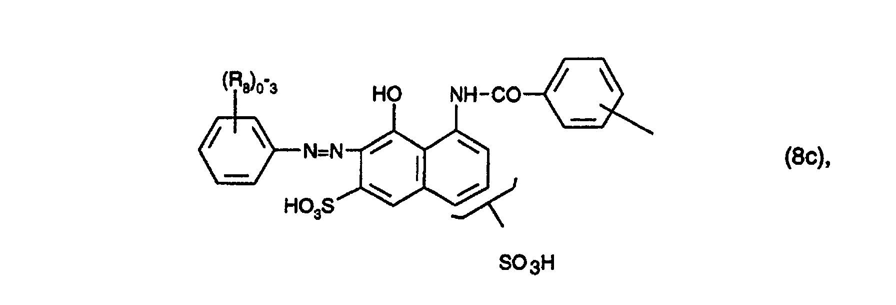 worin (R₈)₀-₃ für 0 bis 3 gleiche oder verschiedene Substituenten aus der Gruppe C₁-C₄-Alkyl, C₁-C₄-Alkoxy, Halogen, Carboxy und Sulfo steht, 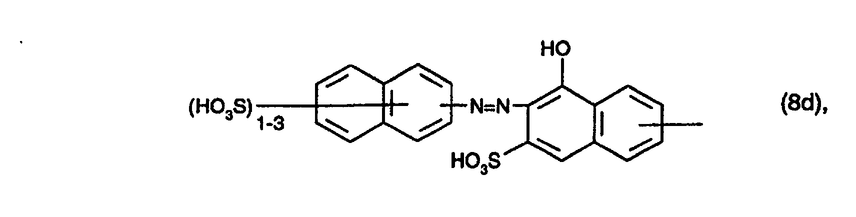 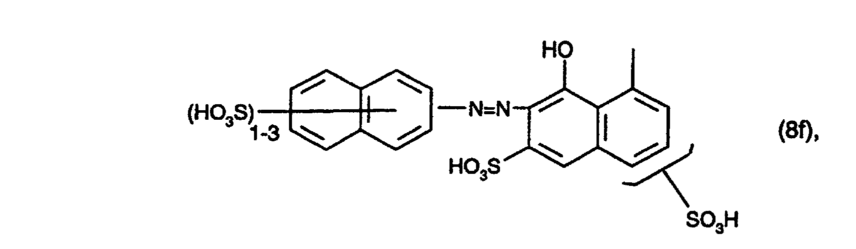 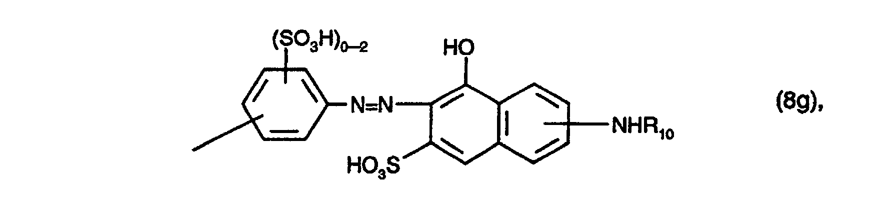 worin R₁₀ C₁-C₄-Alkanoyl, Benzoyl oder ein Halogentriazinylrest der Formel 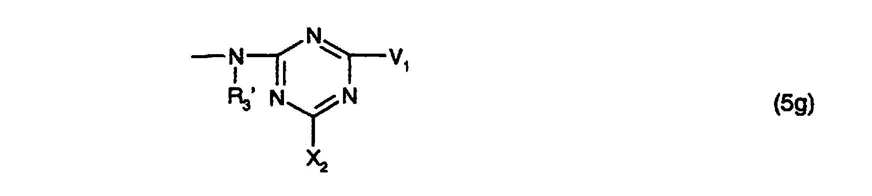 ist, V₁ unabhängig die zuvor für V angegebene Bedeutung hat, X₂ unabhängig die zuvor für X angegebene Bedeutung hat und R₃' unabhängig die zuvor für R₃ angegebene Bedeutung hat, 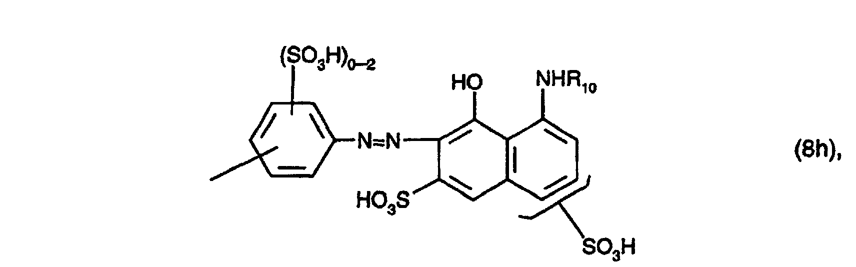 worin R₁₀ C₁-C₄-Alkanoyl, Benzoyl oder ein Halogentriazinylrest der oben angegebenen Formel (5g) ist, 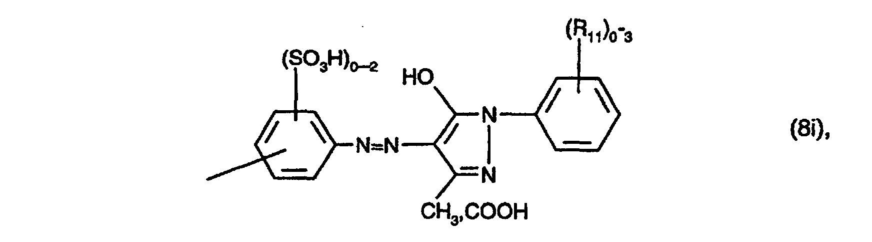 worin (R₁₁)₀-₃ für 0 bis 3 gleiche oder verschiedene Substituenten aus der Gruppe C₁-C₄-Alkyl, C₁-C₄-Alkoxy, Halogen, Carboxy und Sulfo steht, 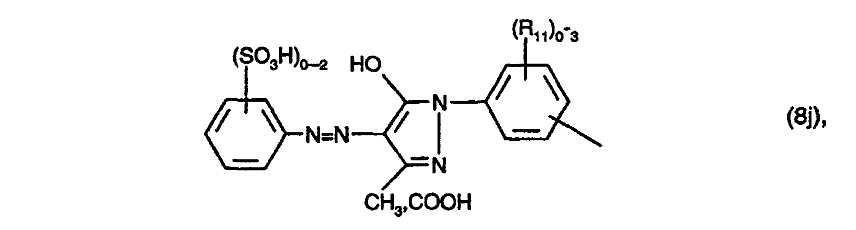 worin (R₁₁)₀-₃ die oben angegebene Bedeutung hat, 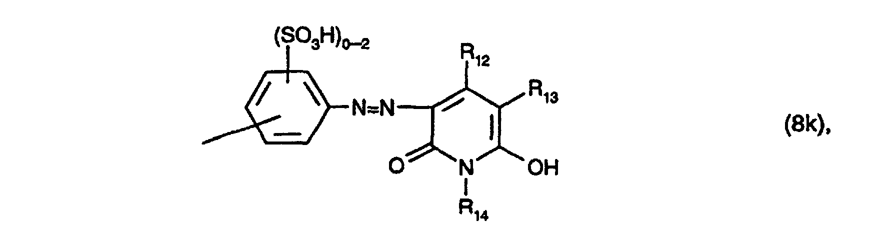 worin R₁₂ und R₁₄ unabhängig voneinander Wasserstoff, C₁-C₄-Alkyl oder Phenyl, und R₁₃ Wasserstoff, Cyano, Carbamoyl oder Sulfomethyl sind, 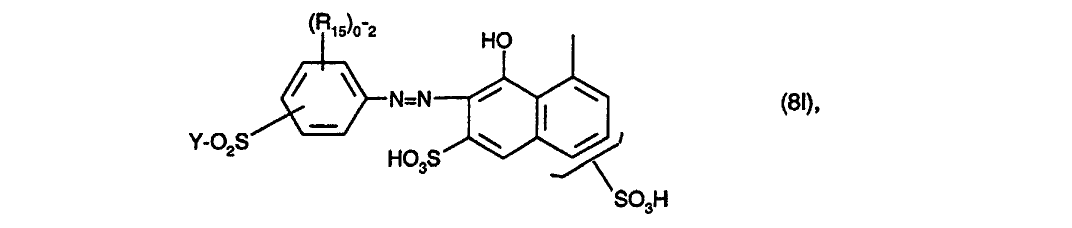 worin (R₁₅)₀-₂ für 0 bis 2 gleiche oder verschiedene Substituenten aus der Gruppe C₁-C₄-Alkyl, C₁-C₄-Alkoxy, Halogen, Carboxy und Sulfo steht; und Y die zuvor angegebene Bedeutung hat, 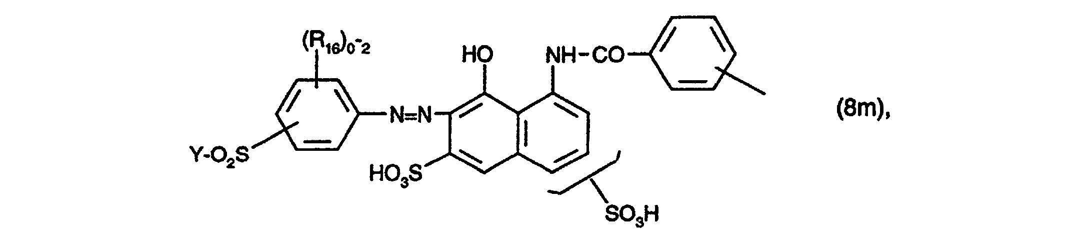 worin (R₁₆)₀-₂ für 0 bis 2 gleiche oder verschiedene Substituenten aus der Gruppe C₁-C₄-Alkyl, C₁-C₄-Alkoxy, Halogen, Carboxy und Sulfo steht; und Y die zuvor angegebene Bedeutung hat, 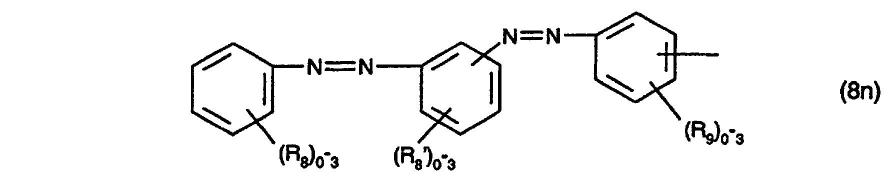 oder 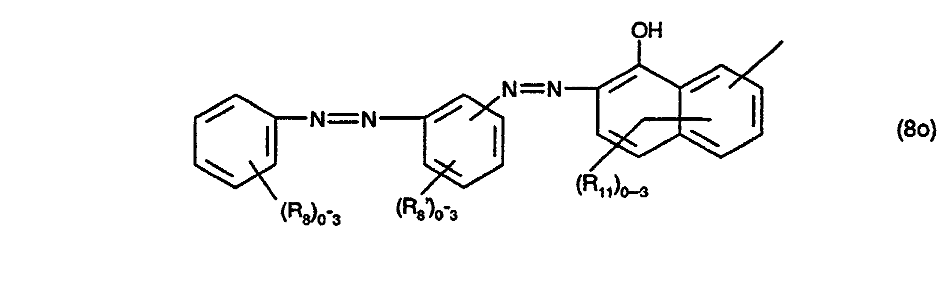 oder 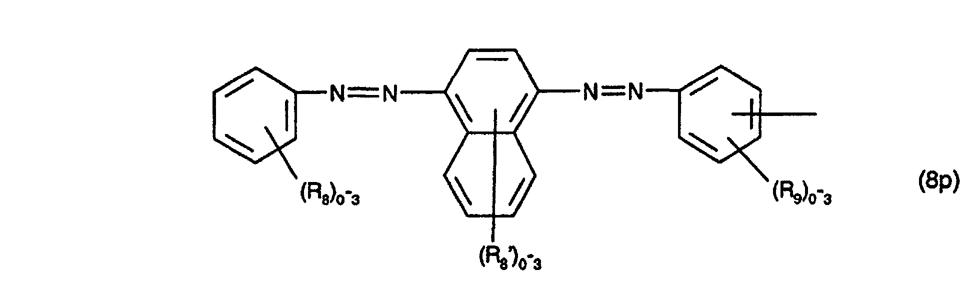 oder 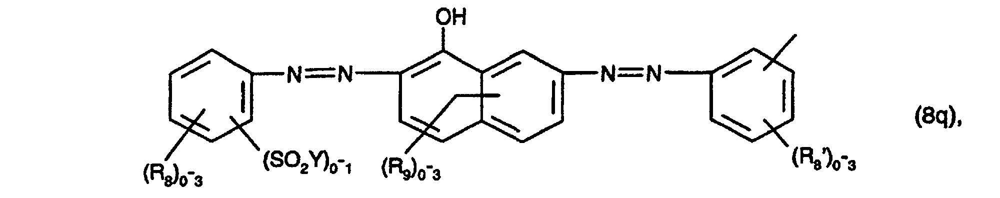 worin (R₈)₀-₃, (R₁₁)₀-₃ und Y jeweils die zuvor angegebene Bedeutung haben, (R₈')₀-₃ für 0 bis 3 gleiche oder verschiedene Substituenten aus der Gruppe C₁-C₄-Alkyl, C₁-C₄-Alkoxy, Halogen, Carboxy, Sulfo, C₁-C₄-Hydroxyalkoxy und C₁-C₄-Sulfatoalkoxy steht, und (R₉)₀-₃ für 0 bis 3 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht, 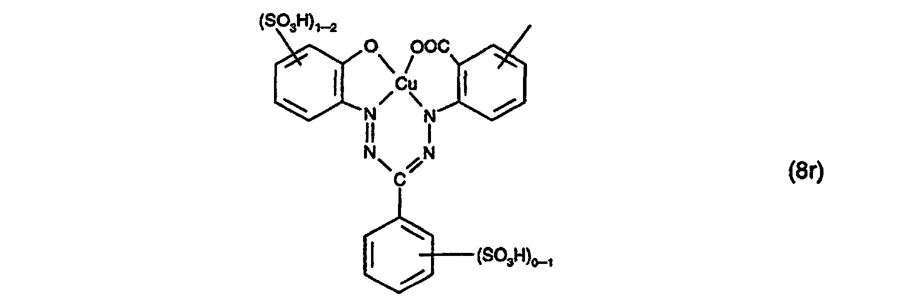 oder 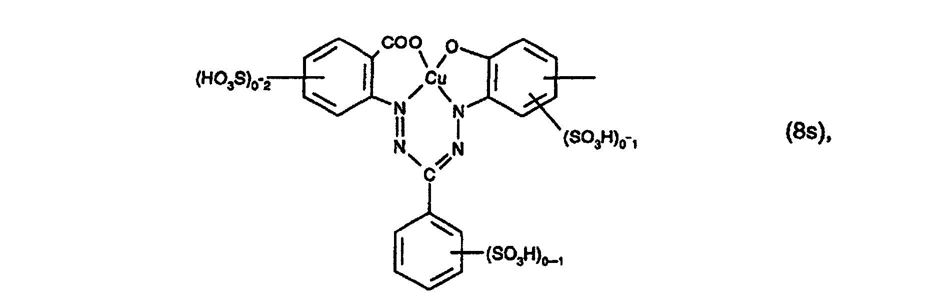 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind, 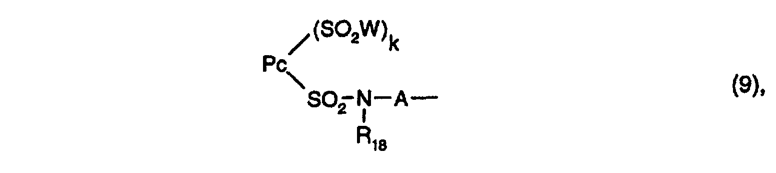 worin Pc der Rest eines Metallphthalocyanins, insbesondere der Rest eines Kupfer- oder Nickelphthalocyanins; W -OH und/oder -NR₁₇R₁₇'; R₁₇ und R₁₇' unabhängig voneinander Wasserstoff oder gegebenenfalls durch Hydroxy oder Sulfo substituiertes C₁-C₄-Alkyl; R₁₈ Wasserstoff oder C₁-C₄-Alkyl; A ein gegebenenfalls durch C₁-C₄-Alkyl, Halogen, Carboxy oder Sulfo substituierter Phenylenrest oder ein C₂-C₆-Alkylenrest; und k 1 bis 3 sind, 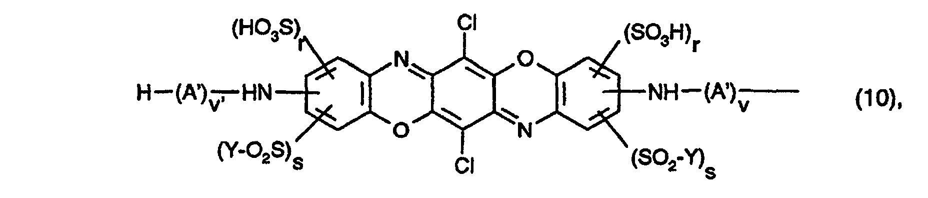 worin A' ein gegebenenfalls durch C₁-C₄-Alkyl, Halogen, Carboxy oder Sulfo substituierter Phenylenrest oder ein C₂-C₆-Alkylenrest ist, r, s, v und v' unabhängig voneinander je die Zahl 0 oder 1 bedeuten und Y die zuvor angegebene Bedeutung hat, ist und worin die Verbindung der Formel (2) mindestens eine Sulfogruppe aufweist.

2. Verbindungen gemäss Anspruch 1, **dadurch gekennzeichnet, dass** R₁, R₂ und R₃ unabhängig voneinander je Wasserstoff oder unsubstituiertes oder durch Hydroxy substituiertes C₁-C₄-Alkyl und vorzugsweise Wasserstoff, Methyl, Ethyl oder Hydroxyethyl bedeuten.

3. Verbindungen gemäss Anspruch 1 oder 2, **dadurch gekennzeichnet, dass** B geradkettiges oder verzweigtes C₂-C₆-Alkylen, welches unsubstituiert und ununterbrochen oder durch Hydroxy substituiert oder durch -O- unterbrochen ist, bedeutet.

4. Verbindungen gemäss einem der Ansprüche 1 bis 3, **dadurch gekennzeichnet, dass** B geradkettiges oder verzweigtes C₂-C₆-Alkylen bedeutet.

5. Verbindungen gemäss einem der Ansprüche 1 bis 4, **dadurch gekennzeichnet, dass** X und X₁ unabhängig voneinander je Chlor oder Fluor bedeuten.

6. Verbindungen gemäss einem der Ansprüche 1 bis 5, **dadurch gekennzeichnet, dass** V Hydroxy, Morpholino, Amino; unsubstituiertes oder im Alkylteil durch Sulfo, Sulfato, Hydroxy, Carboxy oder Phenyl substituiertes N-C₁-C₄-Alkylamino oder N,N-Di-C₁-C₄-Alkylamino, Cyclohexylamino; unsubstituiertes oder im Phenyl- oder Naphthylteil durch C₁-C₄-Alkyl, C₁-C₄-Alkoxy, Amino, C₂-C₄-Alkanoylamino, Carboxy, Sulfo oder Halogen substituiertes Phenylamino oder Naphthylamino, unsubstituiertes oder im Alkylteil durch Sulfo, Sulfato, Hydroxy, Carboxy oder Phenyl substituiertes und/oder im Phenylteil durch C₁-C₄-Alkyl, C₁-C₄-Alkoxy, Amino, C₂-C₄-Alkanoylamino, Carboxy, Sulfo oder Halogen substituiertes N-C₁-C₄-Alkyl-N-phenylamino oder ein Reaktivrest der Formel 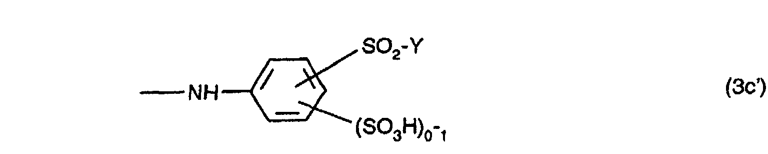 oder 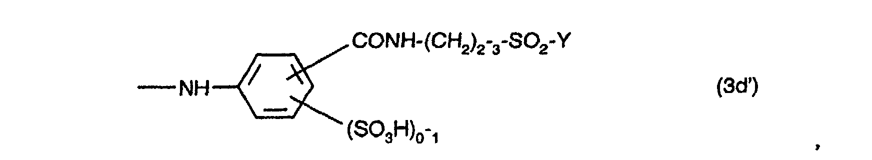 worin Y die im Anspruch 1 genannte Bedeutung hat, ist.

7. Verbindungen gemäss einem der Ansprüche 1 bis 6, **dadurch gekennzeichnet, dass** V Amino, unsubstituiertes oder durch Hydroxy, Sulfo oder Sulfato substituiertes N-C₁-C₂-Alkylamino, durch 1 oder 2 gleiche oder verschiedene Substituenten aus der Gruppe Sulfo, Methyl und Methoxy substituiertes Phenylamino, durch 1 bis 3 Sulfogruppen substituiertes 2-Naphthylamino oder einen faserreaktiven Rest der im Anspruch 6 angegebenen Formel (3c') oder (3d'), worin Y Vinyl oder β-Sulfatoethyl ist, bedeutet.

8. Verbindungen gemäss Anspruch 1, **dadurch gekennzeichnet, dass** B geradkettiges oder verzweigtes C₂-C₆-Alkylen bedeutet, R₁, R₂ und R₃ unabhängig voneinander je Wasserstoff, Methyl, Ethyl oder Hydroxyethyl sind, X und X₁ unabhängig voneinander je Chlor oder Fluor bedeuten und V für Amino, unsubstituiertes oder durch Hydroxy, Sulfo oder Sulfato substituiertes N-Mono- oder N,N-Diethylamino, Cyclohexylamino, unsubstituiertes oder durch Methyl, Methoxy, Carboxy oder Sulfo substituiertes Phenylamino, Mono-, Di- oder Trisulfonaphthylamino, unsubstituiertes oder im C₁-C₂-Alkylteil durch Hydroxy, Sulfo oder Sulfato substituiertes N-C₁-C₂-Alkyl-N-phenylamino oder für einen Reaktivrest der im Anspruch 6 angegebenen Formel (3c') oder (3d') steht.

9. Verfahren zur Herstellung der Verbindungen gemäss Anspruch 1, **dadurch gekennzeichnet, dass** man
eine Aminoverbindung der Formel
D - NH - R₁ (12),
ein Diamin der Formel
R₂ - HN - B - NH - R₃ (13),
eine Verbindung der Formel
V - H (14)
und
je ein Halotriazin der Formel 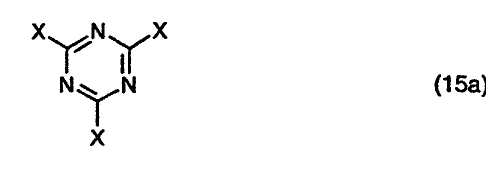 und 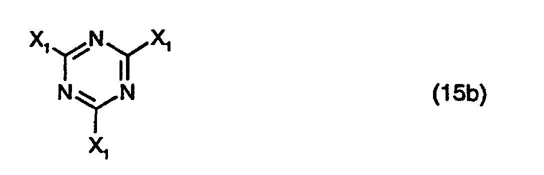 in beliebiger Reihenfolge miteinander umsetzt, wobei B, D, R₁, R₂, R₃, V, X und X₁ jeweils die in Anspruch 1 angegebene Bedeutung haben.

10. Verwendung der Verbindungen gemäss Anspruch 1 als Reaktivfarbstoffe zum Färben oder Bedrucken von hydroxylgruppenhaltigen oder stickstoffhaltigen Fasermaterialien.

## Claims

1. Compounds of the formula 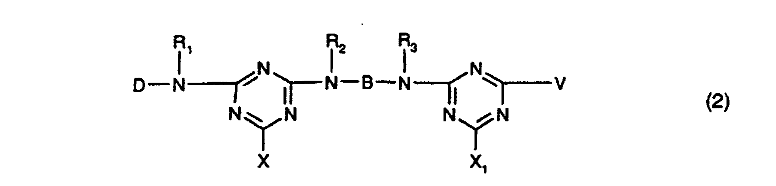 in which
B is straight-chain or branched C₂-C₁₂alkylene which may optionally be substituted by hydroxyl, sulfo or sulfato or interrupted by -O-, -NH- or -N(CH₃)-,
R₁, R₂ and R₃ independently of one another are each hydrogen or unsubstituted or substituted C₁-C₆alkyl,
X and X₁ independently of one another are fluorine, chlorine, bromine, 3-carboxypyridin-1-yl or 3-carbamoylpyridin-1-yl,
V is a non-reactive radical from the group consisting of hydroxyl, phenoxy, C₁-C₄alkylthio, morpholino and substituted or unsubstituted amino or is a reactive radical of the formula 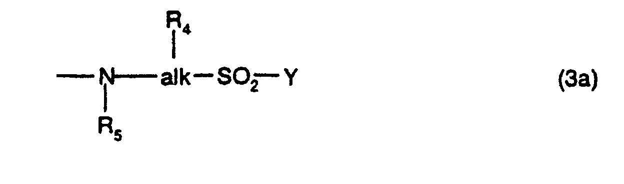 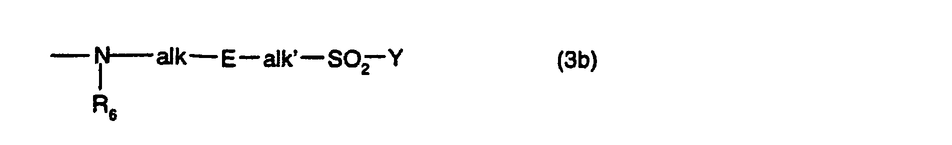 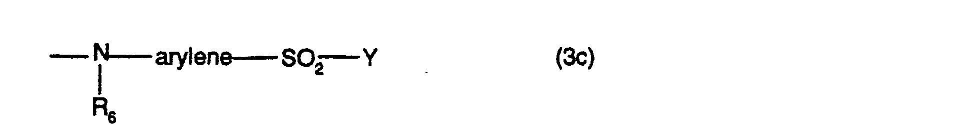 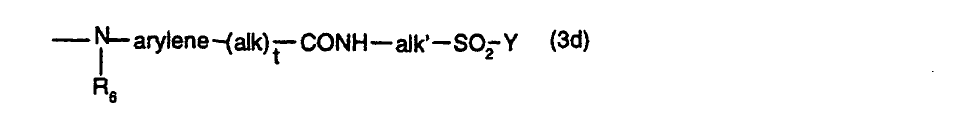 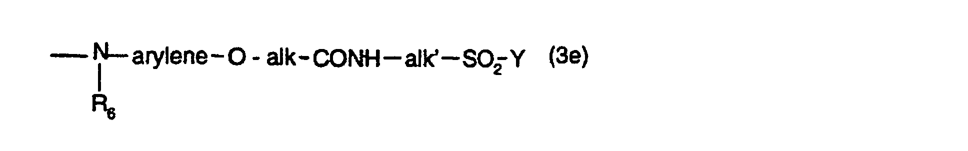 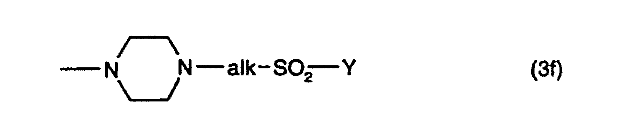 or 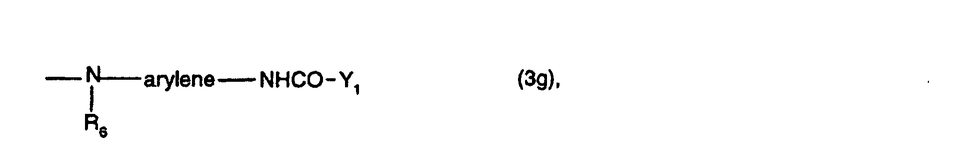 R₄ is hydrogen, hydroxyl, sulfo, sulfato, carboxyl, cyano, halogen, C₁-C₄alkoxycarbonyl, carbamoyl or a group -SO₂-Y,
R₅ is hydrogen, C₁-C₄alkyl which is unsubstituted or substituted by hydroxyl, sulfo, sulfato, carboxyl or cyano or is a radical 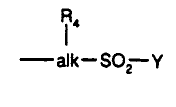 in which R₄ is as defined above,
R₆ is hydrogen or C₁-C₄alkyl,
alk and alk' independently of one another are each C₁-C₆alkylene,
arylene is a phenylene or naphthylene radical which is unsubstituted or substituted by sulfo, carboxyl, hydroxyl, C₁-C₄alkyl, C₁-C₄alkoxy or halogen,
Y is vinyl or a radical -CH₂-CH₂-U and U is a leaving group,
Y₁ is a group -CHZ-CH₂Z or -CZ=CH₂, in which Z is chlorine or bromine,
E is a radical -O- or -NR₆ -, in which R₆ is as defined above, and
t is the number 0 or 1, and
D is a chromophoric radical of the formula 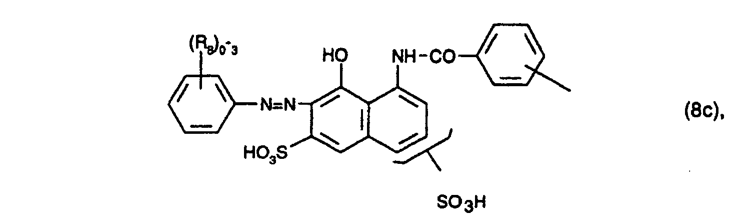 in which (R₈)₀₋₃ represents 0 to 3 identical or different substituents from the group consisting of C₁-C₄alkyl, C₁-C₄alkoxy, halogen, carboxyl and sulfo, 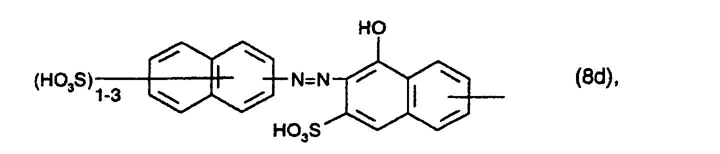 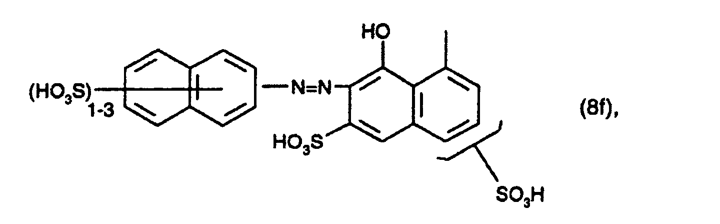 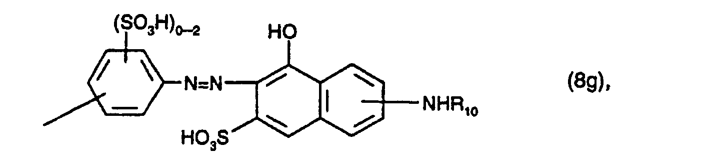 in which R₁₀ is C₁-C₄alkanoyl, benzoyl or a halotriazinyl radical of the formula 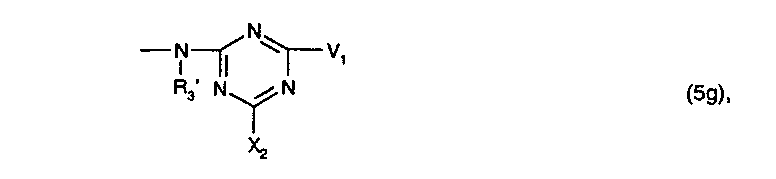 V₁ independently is as defined above for V, X₂ independently is as defined above for X and R₃' independently is as defined above for R₃, 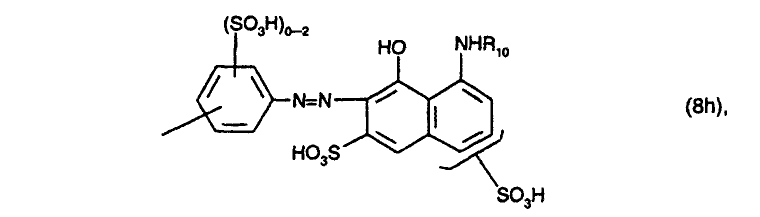 in which R₁₀ is C₁-C₄alkanoyl, benzoyl or a halotriazinyl radical of the above-indicated formula (5g) 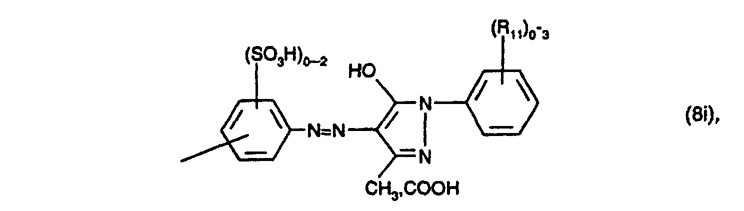 in which (R₁₁)₀₋₃ represents 0 to 3 identical or different substituents from the group consisting of C₁-C₄alkyl, C₁-C₄alkoxy, halogen, carboxyl and sulfo, 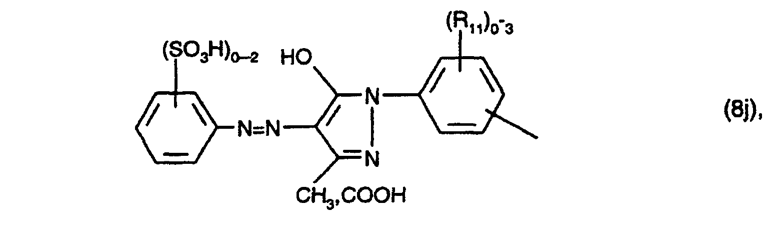 in which (R₁₁)₀₋₃ is as defined above, 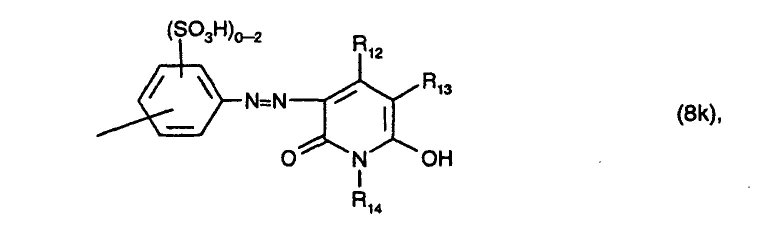 in which R₁₂ and R₁₄ independently of one another are hydrogen, C₁-C₄alkyl or phenyl, and R₁₃ is hydrogen, cyano, carbamoyl or sulfomethyl, 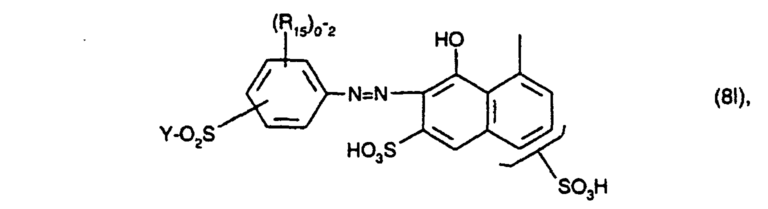 in which (R₁₅)₀₋₂ represents 0 to 2 identical or different substituents from the group consisting of C₁-C₄alkyl, C₁-C₄alkoxy, halogen, carboxyl and sulfo; and Y is as defined above, 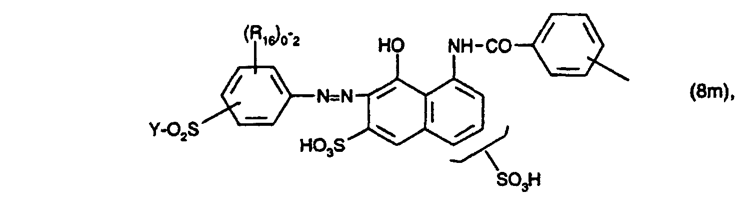 in which (R₁₆)₀₋₂ represents 0 to 2 identical or different substituents from the group consisting of C₁-C₄alkyl, C₁-C₄alkoxy, halogen, carboxyl and sulfo; and Y is as defined above, 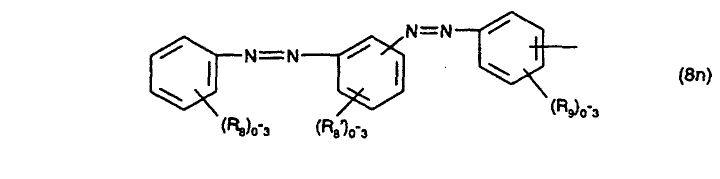 or 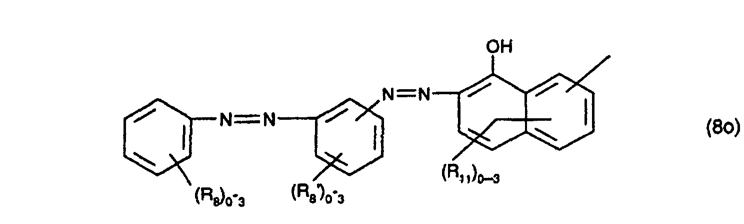 or 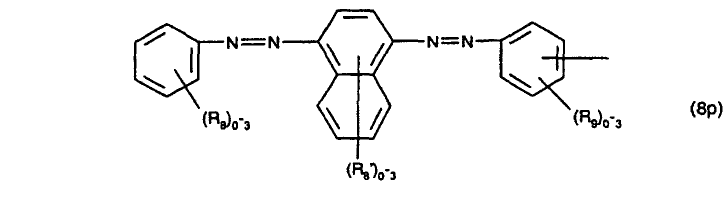 or 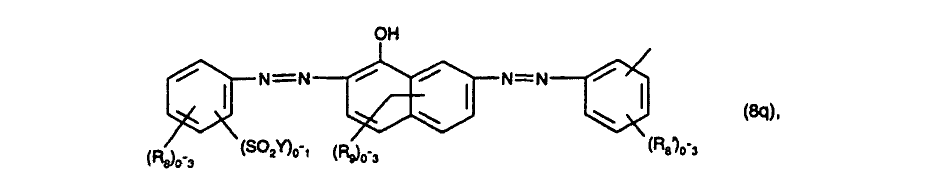 in which (R₈)₀₋₃, (R₁₁)₀₋₃ and Y are each as defined above, (R₈')₀₋₃ represents 0 to 3 identical or different constituents from the group consisting of C₁-C₄alkyl, C₁-C₄alkoxy, halogen, carboxyl, sulfo, C₁-C₄hydroxyalkyl and C₁-C₄sulfatoalkoxy, and (R₉)₀₋₃ represents 0 to 3 identical or different substituents from the group consisting of halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo, 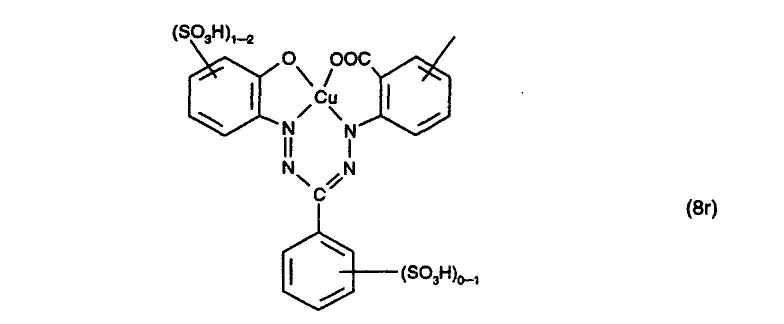 or 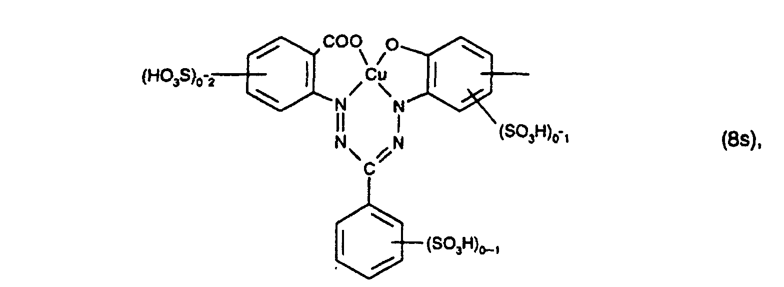 in which the benzene nuclei contain no further substituents or are further substituted by C₁-C₄alkyl, C₁-C₄alkoxy, C₁-C₄alkylsulfonyl, halogen or carboxyl, 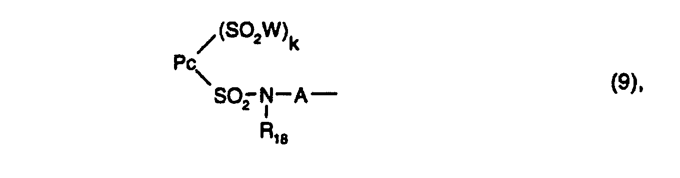 in which Pc is the radical of a metal phthalocyanine, in particular the radical of a copper phthalocyanine or nickel phthalocyanine; W is -OH and/or -NR₁₇R₁₇'; R₁₇ and R₁₇' independently of one another are hydrogen or C₁-C₄alkyl which is unsubstituted or substituted by hydroxyl or sulfo; R₁₈ is hydrogen or C₁-C₄alkyl; A is a phenylene radical which is unsubstituted or substituted by C₁-C₄alkyl, halogen, carboxyl or sulfo, or is a C₂-C₆alkylene radical; and k is 1 to 3, 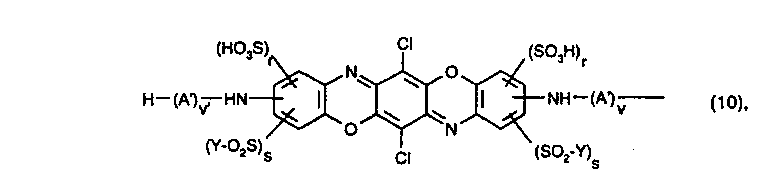 in which A' is a phenylene radical which is unsubstituted or substituted by C₁-C₄alkyl, halogen, carboxyl or sulfo, or is a C₂-C₆alkylene radical, r, s, v and v' independently of one another are each the number 0 or 1 and Y is as defined above, and
in which the compound of the formula (2) has at least one sulfo group.

2. Compounds according to claim 1, **characterized in that** R₁, R₂ and R₃ independently of one another are each hydrogen or C₁-C₄alkyl which is unsubstituted or substituted by hydroxyl and preferably hydrogen, methyl, ethyl or hydroxyethyl.

3. Compounds according to claim 1 or 2, **characterized in that** B is straight-chain or branched C₂-C₆alkylene, which is unsubstituted and uninterrupted or substituted by hydroxyl or interrupted by -O-.

4. Compounds according to any of claims 1 to 3, **characterized in that** B is straight-chain or branched C₂-C₆alkylene.

5. Compounds according to any of claims 1 to 4, **characterized in that** X and X₁ independently of one another are each chlorine or fluorine.

6. Compounds according to any one of claims 1 to 5, **characterized in that** V is hydroxyl, morpholino, amino; N-C₁-C₄alkylamino or N,N-di-C₁-C₄alkylamino, which is unsubstituted or substituted in the alkyl moiety by sulfo, sulfato, hydroxyl, carboxyl or phenyl, cyclohexylamino; phenylamino or naphthylamino which is unsubstituted or substituted in the phenyl or naphthyl moiety by C₁-C₄alkyl, C₁-C₄alkoxy, amino, C₂-C₄alkanoylamino, carboxyl, sulfo or halogen, N-C₁-C₄alkyl-N-phenylamino which is unsubstituted or substituted in the alkyl moiety by sulfo, sulfato, hydroxyl, carboxyl or phenyl and/or in the phenyl moiety by C₁-C₄alkyl, C₁-C₄alkoxy, amino, C₂-C₄ alkanoylamino, carboxyl, sulfo or halogen, or a reactive radical of the formula 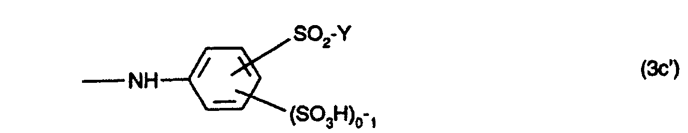 or 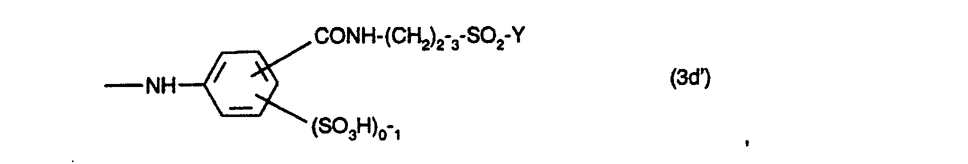 in which Y is as defined in claim 1.

7. Compounds according to any of claims 1 to 6, **characterized in that** V is amino, N-C₁-C₂alkylamino which is unsubstituted or substituted by hydroxyl, sulfo or sulfato, phenylamino which is substituted by 1 or 2 identical or different substituents selected from the group consisting of sulfo, methyl and methoxy, 2-naphthylamino which is substituted by 1 to 3 sulfo groups, or a fiber-reactive radical of the formula (3c') or (3d') indicated in claim 6 in which Y is vinyl or β-sulfatoethyl.

8. Compounds according to claim 1, **characterized in that** B is straight-chain or branched C₂-C₆alkylene, R₁, R₂ and R₃ independently of one another are each hydrogen, methyl, ethyl or hydroxyethyl, X and X₁ independently of one another are each chlorine or fluorine and V is amino, N-mono- or N,N-diethylamino which is unsubstituted or substituted by hydroxyl, sulfo or sulfato, cyclohexylamino, phenylamino which is unsubstituted or substituted by methyl, methoxy, carboxyl or sulfo, mono-, di- or trisulfonaphthylamino, N-C₁-C₂alkyl-N-phenylamino which is unsubstituted or substituted in the C₁-C₂alkyl moiety by hydroxyl, sulfo or sulfato or a reactive radical of the formula (3c') or (3d') indicated in claim 6.

9. A process for preparing the compounds according to claim 1, **characterized in that**
an amino compound of the formula
D-NH-R₁ (12),
a diamine of the formula
R₂-HN-B-NH-R₃ (13),
a compound of the formula
V-H (14)
and
one halotriazine each of 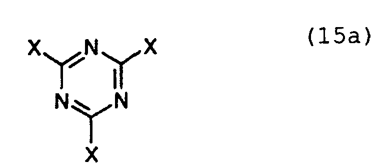 and 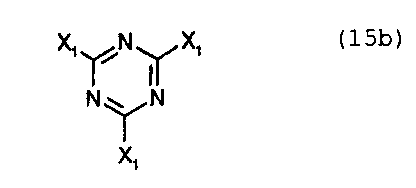 in which B, D, R₁, R₂, R₃, V, X and X₁ are each as defined in claim 1, are reacted with one another in any sequence.

10. Use of the compounds according to claim 1 as reactive dyes for dyeing or printing hydroxyl-containing or nitrogenous fiber materials.

## Revendications

1. Composés de formule 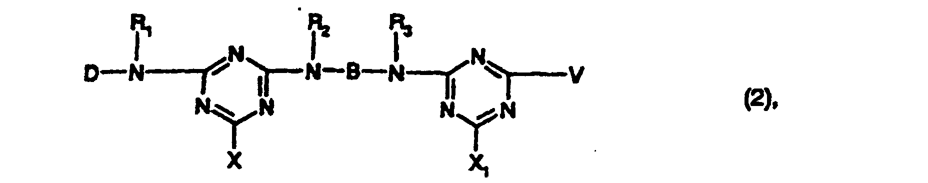 où
B représente un groupe alkylène en C₂-C₁₂ linéaire ou ramifié, qui peut être éventuellement substitué par des substituants hydroxy, sulfo ou sulfato ou interrompu par des groupes -O-, -NH- ou -N(CH₃)-,
R₁, R₂ et R₃ représentent chacun, indépendamment l'un de l'autre, un atome d'hydrogène ou un groupe alkyle en C₁-C₆ non substitué ou substitué,
X et X₁ représentent, indépendamment l'un de l'autre, un atome de fluor, de chlore, de brome, un groupe 3-carboxypyridin-1-yle ou 3-carbamoylpyridin-1-yle,
V représente un reste non réactif pris dans le groupe comprenant hydroxy, phénoxy, (alkyl en C₁ C₄)thio, morpholino et amino éventuellement substitué ou un reste réactif de formule 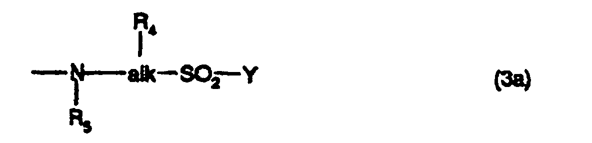 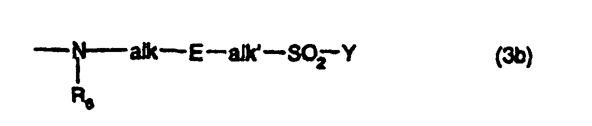 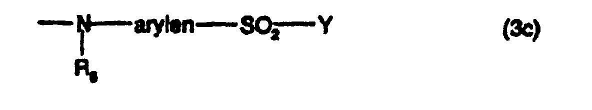 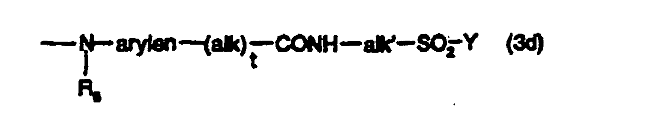 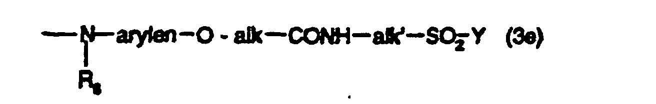 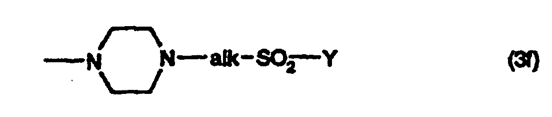
ou 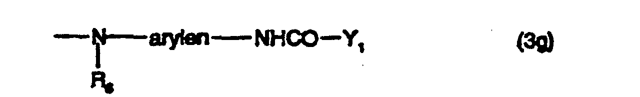
R₄ représente un atome d'hydrogène, des groupes hydroxy, sulfo, sulfato, carboxy, cyano, halogène, (alkoxy en C₁-C₄)carbonyle, carbamoyle ou un groupe -SO₂-Y,
R₅ représente un atome d'hydrogène, un groupe alkyle en C₁-C₄ éventuellement substitué par des substituants hydroxy, sulfo, sulfato, carboxy ou cyano ou un reste 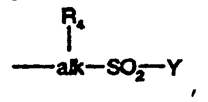 où R₄ possède la signification indiquée auparavant,
R₆ représente un atome d'hydrogène ou un groupe alkyle en C₁-C₄,
alk et alk' représentent chacun indépendamment un groupe alkylène en C₁-C₆,
arylen représente un reste phénylène ou naphtylène non substitué ou substitué par des substituants sulfo, carboxy, hydroxy, alkyle en C₁-C₄, alkoxy en C₁-C₄ ou halogène,
Y représente un groupe vinyle ou un reste -CH₂-CH₂-U et U est un groupe partant,
Y₁ représente un groupe -CHZ-CH₂Z ou CZ=CH₂, où Z représente un atome de chlore ou de brome,
E représente un reste -O- ou -NR₆-, où R₆ possède la signification donnée ci-dessus, et
t vaut 0 ou 1, et
D représente un reste chromophore de formule 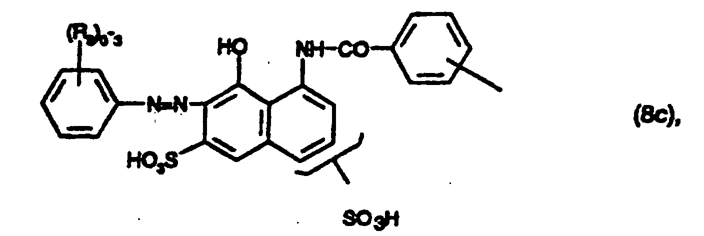
où (R₈)₀₋₃ représente 0 à 3 substituants identiques ou différents pris dans le groupe comprenant alkyle en C₁ C₄, alkoxy en C₁-C₄, halogène, carboxy et sulfo, 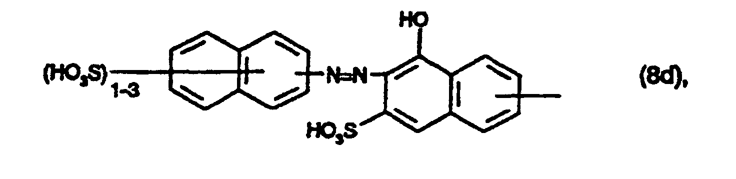 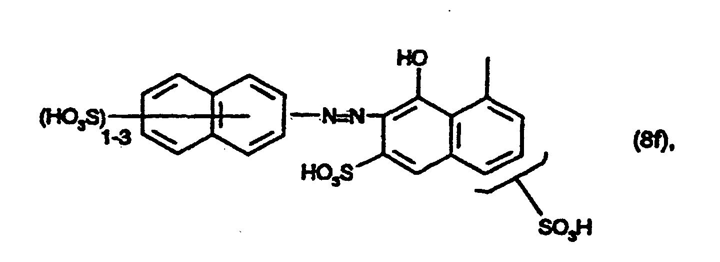 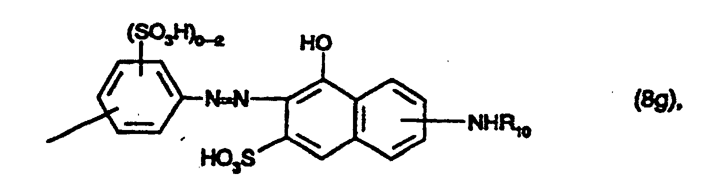 où R₁₀ représente des groupes alcanoyle en C₁-C₄, benzoyle ou un reste halogénotriazinyle de formule 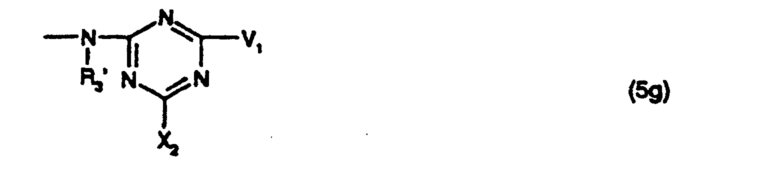 V₁ possède indépendamment la signification donnée auparavant pour V,
X₂ possède indépendamment la signification donnée auparavant pour X et
R₃' possède indépendamment la signification donnée auparavant pour R₃, 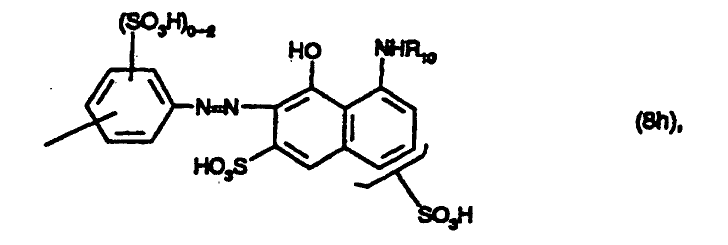 où R₁₀ représente des groupes alcanoyle en C₁-C₄, benzoyle ou un reste halogénotriazinyle de formule (5g) donnée ci-dessus, 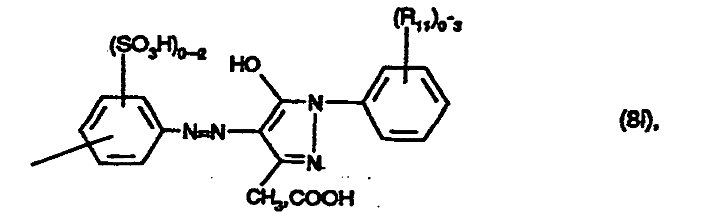 où (R₁₁)₀₋₃ représente 0 à 3 substituants identiques ou différents pris dans le groupe comprenant alkyle en C₁ C₄, alkoxy en C₁-C₄, halogène, carboxy et sulfo, 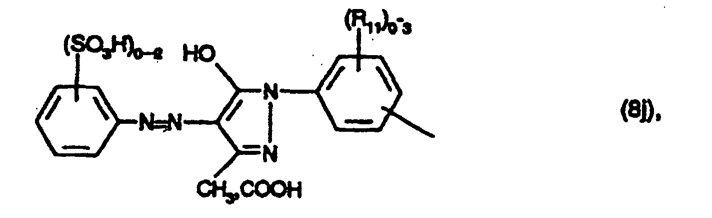 où (R₁₁)₀₋₃ possède la signification donnée ci-dessus, 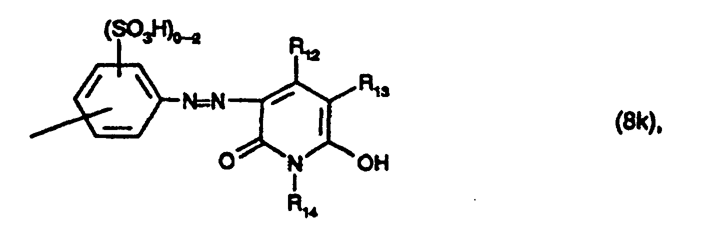 où R₁₂ et R₁₄ représentent indépendamment l'un de l'autre, un atome d'hydrogène, des groupes alkyle en C₁-C₄ ou phényle, et R₁₃ représente un atome d'hydrogène, des groupes cyano, carbamoyle ou sulfométhyle, 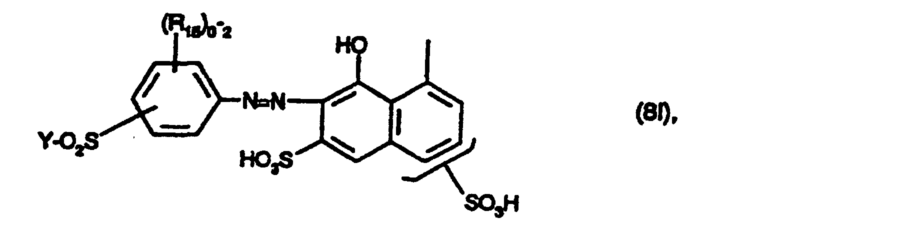 où (R₁₅)₀₋₂ représente 0 à 2 substituants identiques ou différents pris dans le groupe comprenant alkyle en C₁ C₄, alkoxy en C₁-C₄, halogène, carboxy et sulfo ; et Y possède la signification donnée auparavant, 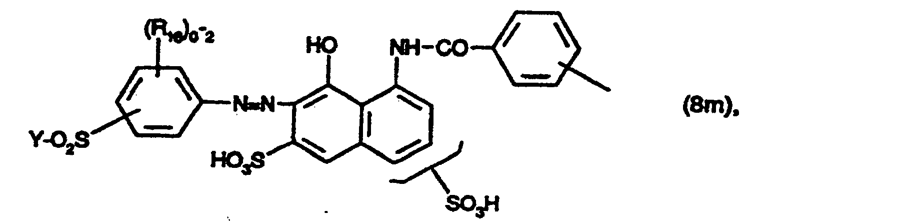 où (R₁₆)₀₋₂ représente 0 à 2 substituants identiques ou différents pris dans le groupe comprenant alkyle en C₁ C₄, alkoxy en C₁-C₄, halogène, carboxy et sulfo ; et Y possède la signification donnée auparavant, 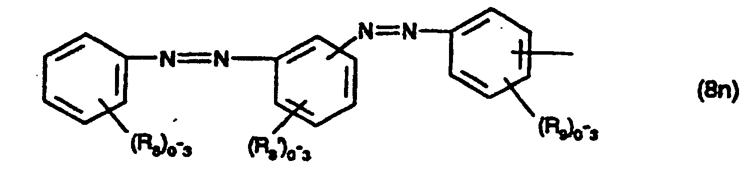 ou 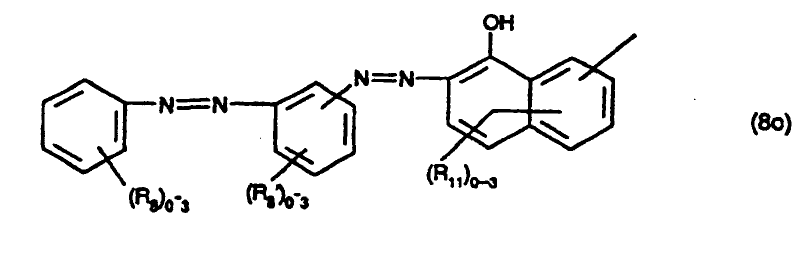 ou 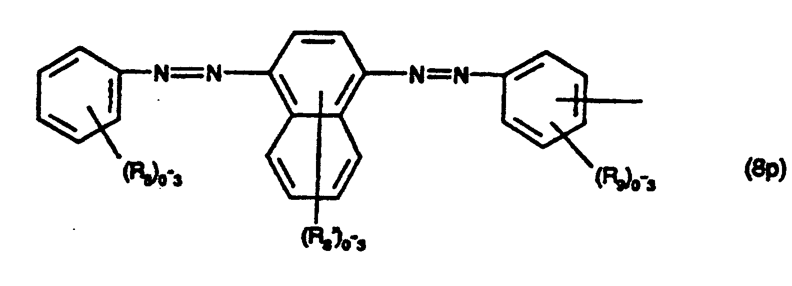 ou 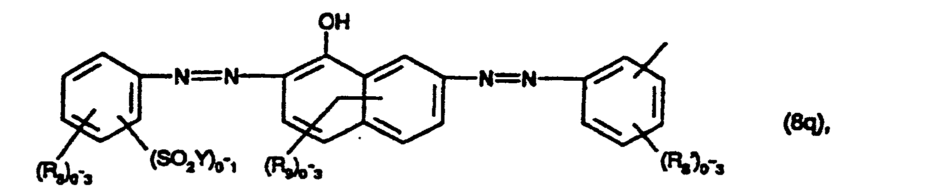 où (R₈)₀₋₃, (R₁₁)₀₋₃ et Y possèdent chacun la signification donnée auparavant, (R₈')₀₋₃ représente 0 à 3 substituants identiques ou différents pris dans le groupe comprenant alkyle en C₁-C₄, alkoxy en C₁-C₄, halogène, carboxy, sulfo, hydroxyalkoxy en C₁-C₄ et sulfatoalkoxy en C₁-C₄, et (R₉)₀₋₃ représente 0 à 3 substituants identiques ou différents pris dans le groupe comprenant halogène, nitro, cyano, trifluorométhyle, sulfamoyle, carbamoyle, alkyle en C₁-C₄, alkoxy en C₁-C₄, amino, acétylamino, uréido, hydroxy, carboxy, sulfométhyle et sulfo, 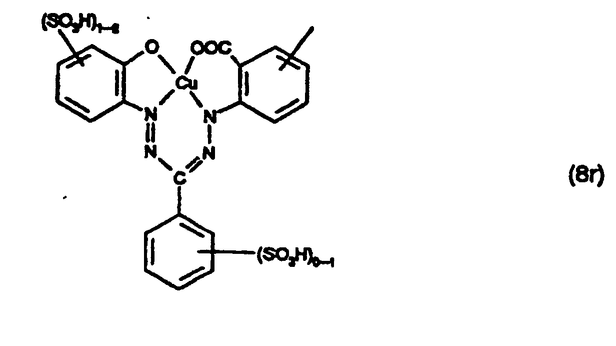 ou 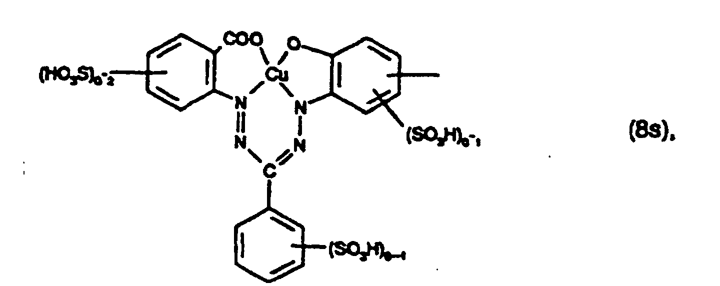 où les noyaux benzéniques ne présentent pas d'autres substituants ou sont substitués davantage par des substituants alkyle en C₁-C₄, alkoxy en C₁-C₄, (alkyl en C₁-C₄)sulfonyle, halogène ou carboxy, 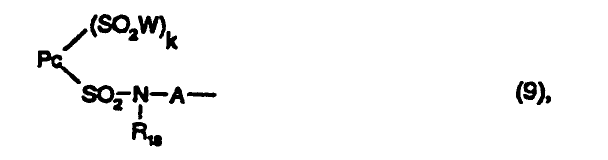 où Pc représente le reste d'une phtalocyanine métallifère, en particulier le reste d'une phtalocyanine de cuivre ou de nickel ; W représente des groupes -OH et/ou -NR₁₇R₁₇' ; R₁₇ et R₁₇' représentent indépendamment l'un de l'autre, un atome d'hydrogène ou un groupe alkyle en C₁-C₄ éventuellement substitué par un substituant hydroxy ou sulfo ; R₁₈ représente un atome d'hydrogène ou un groupe alkyle en C₁-C₄ ; A représente un reste alkylène en C₂-C₆ ou un reste phénylène éventuellement substitué par des substituants alkyle en C₁-C₄, halogène, carboxy ou sulfo ; et k va de 1 à 3, ou 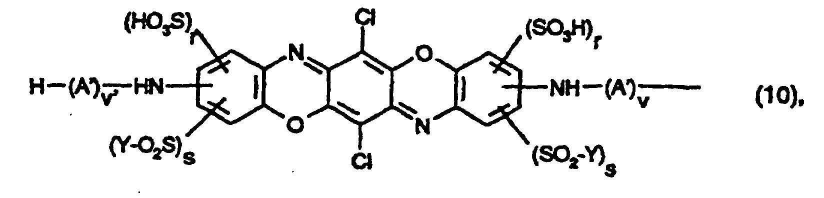 où A' représente un reste alkylène en C₂-C₆ ou un reste phénylène éventuellement substitué par des substituants alkyle en C₁-C₄, halogène, carboxy ou sulfo, r, s, v et v' valent chacun, indépendamment les uns des autres, 0 ou 1 et Y possède la signification donnée auparavant, et où le composé de formule (2) présente au moins un groupe sulfo.

2. Composés selon la revendication 1, **caractérisés en ce que** R₁, R₂ et R₃ représentent chacun, indépendamment les uns des autres, un atome d'hydrogène ou un groupe alkyle en C₁-C₄ non substitué ou substitué par un substituant hydroxy, et de préférence un atome d'hydrogène, un groupe méthyle, éthyle ou hydroxyéthyle.

3. Composés selon la revendication 1 ou 2, **caractérisés en ce que** B représente un groupe alkylène en C₂-C₆ linéaire ou ramifié qui est non substitué et non interrompu ou substitué par un substituant hydroxy et interrompu par -O-.

4. Composés selon l'une des revendications 1 à 3, **caractérisés en ce que** B représente un groupe alkylène en C₂-C₆ linéaire ou ramifié.

5. Composés selon l'une des revendications 1 à 4, **caractérisés en ce que** X et X₁ représentent chacun, indépendamment l'un de l'autre, un atome de chlore ou de fluor.

6. Composés selon l'une des revendications 1 à 5, **caractérisés en ce que** V représente des groupes hydroxy, morpholino, amino ; cyclohexylamino, N-(alkyl en C₁-C₄)amino ou N,N-di-(alkyl en C₁-C₄)amino non substitué ou substitué dans le fragment alkyle par des substituants sulfo, sulfato, hydroxy, carboxy ou phényle ; naphtylamino ou phénylamino non substitué ou substitué dans le fragment phényle ou naphtyle par des substituants alkyle en C₁-C₄, alkoxy en C₁-C₄, amino, (alcanoyl en C₂-C₄)amino, carboxy, sulfo ou halogène, N-(alkyl en C₁-C₄)-N-phénylamino non substitué ou substitué dans le fragment alkyle par des substituants sulfo, sulfato, hydroxy, carboxy ou phényle et/ou dans le fragment phényle par des substituants alkyle en C₁-C₄, alkoxy en C₁-C₄, amino, (alcanoyl en C₂-C₄)amino, carboxy, sulfo ou halogène ou un reste réactif de formule 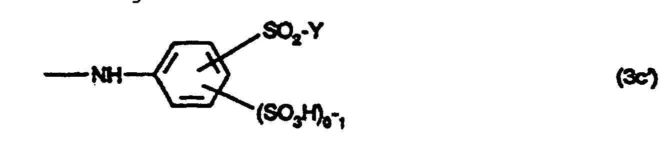 ou 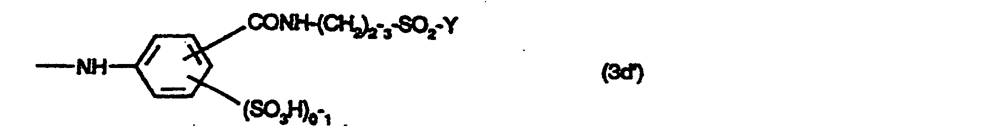 où Y possède la signification donnée à la revendication 1.

7. Composés selon l'une des revendications 1 à 6, **caractérisés en ce que** V représente des groupes amino, N-(alkyl en C₁-C₂)amino non substitué ou substitué par des substituants pris dans le groupe comprenant hydroxy, sulfo ou sulfato, phénylamino substitué par 1 ou 2 substituants identiques ou différents pris dans le groupe comprenant sulfo, méthyle et méthoxy, 2-naphtylamino substitué par 1 à 3 groupes sulfo ou un reste réactif sur la fibre de formule (3c') ou (3d') données à la revendication 6, où Y représente un groupe vinyle ou β-sulfatoéthyle.

8. Composés selon la revendication 1, **caractérisés en ce que** B représente un groupe alkylène en C₂-C₆ linéaire ou ramifié, R₁, R₂ et R₃ représentent chacun, indépendamment les uns des autres, un atome d'hydrogène, des groupes méthyle, éthyle ou hydroxyéthyle, X et X₁ représentent chacun indépendamment l'un de l'autre un atome de chlore ou de fluor et V représente un reste amino, N-mono- ou N,N-diéthylamino non substitué ou substitué par des substituants hydroxy, sulfo ou sulfato, cyclohexylamino, phénylamino non substitué ou substitué par des substituants méthyle, méthoxy, carboxy ou sulfo, mono-, di- ou trisulfonaphtylamino, N-(alkyl en C₁-C₂)-N-phénylamino non substitué ou substitué dans le frament alkyle en C₁-C₂ par des substituants hydroxy, sulfo ou sulfato, ou représente un reste réactif de formules (3c') ou (3d') donnée à la revendication 6.

9. Procédé pour la préparation des composés selon la revendication 1, **caractérisé en ce qu'**on fait réagir
un composé aminé de formule
D-NH-R₁ (12)
une diamine de formule
R₂-HN-B-NH-R₃ (13)
un composé de formule
V-H (14)
et
respectivement une halotriazine de formule 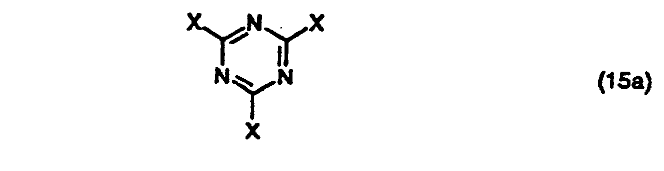 et 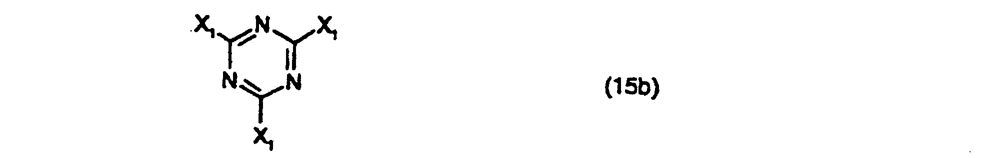 dans un ordre quelconque, B, D, R₁, R₂, R₃, V, X et X₁ possèdent chacun la signification donnée à la revendication 1.

10. Utilisation des composés selon la revendication 1 en tant que colorants réactifs pour la teinture ou l'impression de matières fibreuses hydroxylées ou azotées.
